(19) **Europäisches Patentamt / European Patent Office / Office européen des brevets**

(11) **EP 4 503 605 A1**

(12) **EUROPEAN PATENT APPLICATION**
published in accordance with Art. 153(4) EPC

(43) Date of publication:
**05.02.2025 Bulletin 2025/06**

(21) Application number: **23781260.7**

(22) Date of filing: **27.03.2023**

(51) International Patent Classification (IPC):
*H04N 19/12* (2014.01)        *H04N 19/107* (2014.01)
*H04N 19/625* (2014.01)      *H04N 19/61* (2014.01)
*H04N 19/157* (2014.01)      *H04N 19/176* (2014.01)

(52) Cooperative Patent Classification (CPC):
**H04N 19/107; H04N 19/12; H04N 19/157;
H04N 19/176; H04N 19/61; H04N 19/625**

(86) International application number:
**PCT/KR2023/004002**

(87) International publication number:
**WO 2023/191404 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.03.2022  US 202263324143 P**

(71) Applicant: **LG Electronics Inc.
Yeongdeungpo-gu
Seoul 07336 (KR)**

(72) Inventors:
• **CHOI, Jangwon**
  **Seoul 06772 (KR)**
• **CHOI, Jungah**
  **Seoul 06772 (KR)**
• **YOO, Sunmi**
  **Seoul 06772 (KR)**

(74) Representative: **Maikowski & Ninnemann
Patentanwälte Partnerschaft mbB
Postfach 15 09 20
10671 Berlin (DE)**

(54) **ADAPTIVE MTS-BASED IMAGE ENCODING/DECODING METHOD, DEVICE, AND RECORDING MEDIUM FOR STORING BITSTREAM**

(57)    An image encoding/decoding method and apparatus are provided. The image encoding method comprises determining whether multiple transform selection (MTS) is applied to a current block and performing transform on the current block based on a predetermined MTS set, based on the MTS being applied to the current block. The MTS set may be determined based on whether a prediction mode of the current block is a combined inter and intra prediction (CIIP) mode.

FIG. 19

EP 4 503 605 A1

## Description

### Technical Field

The present disclosure relates to an image encoding/decoding method and a recording medium storing a bitstream, and more specifically, to an image encoding/decoding method and apparatus based on an adaptive MTS in a CIIP mode and a recording medium storing a bitstream generated by the image encoding method/apparatus of the present disclosure.

### Background Art

Recently, demand for high-resolution and high-quality images such as high definition (HD) images and ultra high definition (UHD) images is increasing in various fields. As resolution and quality of image data are improved, the amount of transmitted information or bits relatively increases as compared to existing image data. An increase in the amount of transmitted information or bits causes an increase in transmission cost and storage cost.

Accordingly, there is a need for high-efficient image compression technology for effectively transmitting, storing and reproducing information on high-resolution and high-quality images.

### Disclosure

### Technical Problem

An object of the present disclosure is to provide an image encoding/decoding method and apparatus with improved encoding/decoding efficiency.

In addition, an object of the present disclosure is to provide an image encoding/decoding method and apparatus that adaptively applies MTS in a CIIP mode.

In addition, an object of the present disclosure is to provide an image encoding/decoding method and apparatus that adaptively determines an MTS set in a CIIP mode.

In addition, an object of the present disclosure is to provide a non-transitory computer-readable recording medium storing a bitstream generated by an image encoding method or apparatus according to the present disclosure.

In addition, an object of the present disclosure is to provide a non-transitory computer-readable recording medium storing a bitstream received, decoded and used to reconstruct an image by an image decoding apparatus according to the present disclosure.

In addition, an object of the present disclosure is to provide a method of transmitting a bitstream generated by an image encoding method or apparatus according to the present disclosure.

The technical problems solved by the present disclosure are not limited to the above technical problems and other technical problems which are not described herein will become apparent to those skilled in the art from the following description.

### Technical Solution

An image decoding method according to an aspect of the present disclosure may comprise determining whether multiple transform selection (MTS) is applied to a current block and performing inverse transform on the current block based on a predetermined MTS set, based on the MTS being applied to the current block. The MTS set may be determined based on whether a prediction mode of the current block is a combined inter and intra prediction (CIIP) mode.

An image decoding apparatus according to another aspect of the present disclosure may comprise a memory and at least one processor. The at least one processor may determine whether multiple transform selection (MTS) is applied to a current block and perform inverse transform on the current block based on a predetermined MTS set, based on the MTS being applied to the current block. The MTS set may be determined based on whether a prediction mode of the current block is a combined inter and intra prediction (CIIP) mode.

An image encoding method according to another aspect of the present disclosure may comprise determining whether multiple transform selection (MTS) is applied to a current block and performing transform on the current block based on a predetermined MTS set, based on the MTS being applied to the current block. The MTS set may be determined based on whether a prediction mode of the current block is a combined inter and intra prediction (CIIP) mode.

A computer-readable recording medium according to another aspect of the present disclosure may store a bitstream generated by an image encoding method or image encoding apparatus of the present disclosure.

A transmission method according to another aspect of the present disclosure may transmit a bitstream generated by an image encoding apparatus or image encoding method of the present disclosure.

The features briefly summarized above with respect to the present disclosure are merely exemplary aspects of the detailed description below of the present disclosure, and do not limit the scope of the present disclosure.

**Advantageous Effects**

According to the present disclosure, it is possible to provide an image encoding/decoding method and apparatus with improved encoding/decoding efficiency.

According to the present disclosure, it is possible to provide an image encoding/decoding method and apparatus that adaptively applies MTS in a CIIP mode.

According to the present disclosure, it is possible to provide an image encoding/decoding method and apparatus that adaptively determines an MTS set in a CIIP mode.

In addition, according to the present disclosure, a non-transitory computer-readable recording medium storing a bitstream generated by an image encoding method or apparatus according to the present disclosure can be provided.

According to the present disclosure, it is possible to provide a non-transitory recording medium storing a bitstream received, decoded and used to reconstruct an image by an image decoding apparatus according to the present disclosure.

According to the present disclosure, it is possible to provide a method of transmitting a bitstream generated by an image encoding method or apparatus according to the present disclosure.

It will be appreciated by persons skilled in the art that that the effects that can be achieved through the present disclosure are not limited to what has been particularly described hereinabove and other advantages of the present disclosure will be more clearly understood from the detailed description.

**Description of Drawings**

FIG. 1 is a view schematically showing a video coding system, to which an embodiment of the present disclosure is applicable.

FIG. 2 is a view schematically showing an image encoding apparatus, to which an embodiment of the present disclosure is applicable.

FIG. 3 is a view schematically showing an image decoding apparatus, to which an embodiment of the present disclosure is applicable.

FIGS. 4A to 4D are diagrams showing reference samples defined in PDPC.

FIG. 5 is a diagram showing an example of a template used in TIMD.

FIG. 6 is a diagram showing an example of neighboring blocks used to calculate a weight of CIIP.

FIG. 7 is a diagram showing a prediction process according to a PDPC blending CIIP mode.

FIG. 8 is a diagram illustrating a CIIP weight applied to a subblock.

FIG. 9 is a diagram illustrating a transform and inverse transform process.

FIG. 10 is a flowchart illustrating an encoding process in which AMT is performed.

FIG. 11 is a flowchart illustrating a decoding process in which AMT is performed.

FIGS. 12 to 17 are flowcharts illustrating an MTS application methods according to embodiments of the present disclosure.

FIG. 18 is a flowchart illustrating an image encoding method according to an embodiment of the present disclosure.

FIG. 19 is a flowchart illustrating an image decoding method according to an embodiment of the present disclosure.

FIG. 20 is a view illustrating a content streaming system to which an embodiment of the present disclosure is applicable.

**Mode for Invention**

Hereinafter, the embodiments of the present disclosure will be described in detail with reference to the accompanying drawings so as to be easily implemented by those skilled in the art. However, the present disclosure may be implemented in various different forms, and is not limited to the embodiments described herein.

In describing the present disclosure, if it is determined that the detailed description of a related known function or construction renders the scope of the present disclosure unnecessarily ambiguous, the detailed description thereof will be omitted. In the drawings, parts not related to the description of the present disclosure are omitted, and similar reference numerals are attached to similar parts.

In the present disclosure, when a component is "connected", "coupled" or "linked" to another component, it may include not only a direct connection relationship but also an indirect connection relationship in which an intervening component is present. In addition, when a component "includes" or "has" other components, it means that other components may be further included, rather than excluding other components unless otherwise stated.

In the present disclosure, the terms first, second, etc. may be used only for the purpose of distinguishing one component from other components, and do not limit the order or importance of the components unless otherwise stated. Accordingly, within the scope of the present disclosure, a first component in one embodiment may be referred to as a second component in another embodiment, and similarly, a second component in one embodiment may be referred to as a first component in another embodiment.

In the present disclosure, components that are distinguished from each other are intended to clearly describe each feature, and do not mean that the components are necessarily separated. That is, a plurality of components may be integrated and implemented in one hardware or software unit, or one component may be distributed and implemented in a plurality of hardware or software units. Therefore, even if not stated otherwise, such embodiments in which the components are integrated or the component is distributed are also included in the scope of the present disclosure.

In the present disclosure, the components described in various embodiments do not necessarily mean essential components, and some components may be optional components. Accordingly, an embodiment consisting of a subset of components described in an embodiment is also included in the scope of the present disclosure. In addition, embodiments including other components in addition to components described in the various embodiments are included in the scope of the present disclosure.

The present disclosure relates to encoding and decoding of an image, and terms used in the present disclosure may have a general meaning commonly used in the technical field, to which the present disclosure belongs, unless newly defined in the present disclosure.

In the present disclosure, a "video" may mean a set of images over time.

In the present disclosure, a "picture" generally refers to a unit representing one image in a specific time period, and a slice/tile is a coding unit constituting a part of a picture, and one picture may be composed of one or more slices/tiles. In addition, a slice/tile may include one or more coding tree units (CTUs).

In the present disclosure, a "pixel" or a "pel" may mean a smallest unit constituting one picture (or image). In addition, "sample" may be used as a term corresponding to a pixel. A sample may generally represent a pixel or a value of a pixel, and may represent only a pixel/pixel value of a luma component or only a pixel/pixel value of a chroma component.

In the present disclosure, a "unit" may represent a basic unit of image processing. The unit may include at least one of a specific region of the picture and information related to the region. The unit may be used interchangeably with terms such as "sample array", "block" or "area" in some cases. In a general case, an M×N block may include samples (or sample arrays) or a set (or array) of transform coefficients of M columns and N rows.

In the present disclosure, "current block" may mean one of "current coding block", "current coding unit", "coding target block", "decoding target block" or "processing target block". When prediction is performed, "current block" may mean "current prediction block" or "prediction target block". When transform (inverse transform)/quantization (dequantization) is performed, "current block" may mean "current transform block" or "transform target block". When filtering is performed, "current block" may mean "filtering target block".

In addition, in the present disclosure, a "current block" may mean a block including both a luma component block and a chroma component block or "a luma block of a current block" unless explicitly stated as a chroma block. The luma component block of the current block may be expressed by including an explicit description of a luma component block such as "luma block" or "current luma block. In addition, the "chroma component block of the current block" may be expressed by including an explicit description of a chroma component block, such as "chroma block" or "current chroma block".

In the present disclosure, the term "/" and "," should be interpreted to indicate "and/or." For instance, the expression "A/B" and "A, B" may mean "A and/or B." Further, "A/B/C" and "A/B/C" may mean "at least one of A, B, and/or C."

In the present disclosure, the term "or" should be interpreted to indicate "and/or." For instance, the expression "A or B" may comprise 1) only "A", 2) only "B", and/or 3) both "A and B". In other words, in the present disclosure, the term "or" should be interpreted to indicate "additionally or alternatively."

In the present disclosure, "at least one of A, B, and C" may mean "only A," "only B," "only C," or "any and all combinations of A, B, and C." In addition, "at least one A, B or C" or "at least one A, B and/or C" may mean "at least one A, B and C."

Parentheses used in the present disclosure may mean "for example." For example, if "prediction (intra prediction)" is indicated, "intra prediction" may be proposed as an example of "prediction." In other words, "prediction" in the present disclosure is not limited to "intra prediction," and "intra prediction" may be proposed as an example of "prediction." In addition, even when "prediction (i.e., intra prediction)" is indicated, "intra prediction" may be proposed as an example of "prediction."

### Overview of video coding system

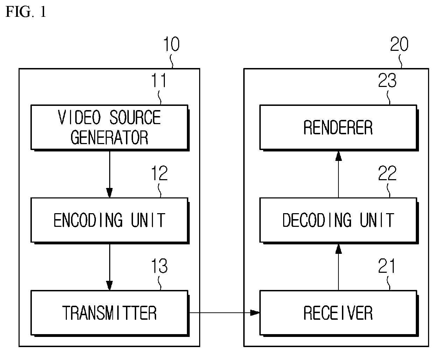

FIG. 1 is a view showing a video coding system, to which an embodiment of the present disclosure is applicable.

The video coding system according to an embodiment may include an encoding device 10 and a decoding device 20. The encoding device 10 may deliver encoded video and/or image information or data to the decoding device 20 in the form of a file or streaming via a digital storage medium or network.

The encoding device 10 according to an embodiment may include a video source generator 11, an encoding unit 12 and a transmitter 13. The decoding device 20 according to an embodiment may include a receiver 21, a decoding unit 22 and a renderer 23. The encoding unit 12 may be called a video/image encoding device, and the decoding unit 22 may be called a video/image decoding device. The transmitter 13 may be included in the encoding unit 12. The receiver 21 may be included in the decoding unit 22. The renderer 23 may include a display and the display may be configured as a separate device or an external component.

The video source generator 11 may acquire a video/image through a process of capturing, synthesizing or generating the video/image. The video source generator 11 may include a video/image capture device and/or a video/-image generating device. The video/image capture device may include, for example, one or more cameras, video/image archives including previously captured video/images, and the like. The video/image generating device may include, for example, computers, tablets and smartphones, and may (electronically) generate video/images. For example, a virtual video/image may be generated through a computer or the like. In this case, the video/image capturing process may be replaced by a process of generating related data.

The encoding unit 12 may encode an input video/image. The encoding unit 12 may perform a series of procedures such as prediction, transform, and quantization for compression and coding efficiency. The encoding unit 12 may output encoded data (encoded video/image information) in the form of a bitstream.

The transmitter 13 may transmit the encoded video/image information or data output in the form of a bitstream to the receiver 21 of the decoding device 20 through a digital storage medium or a network in the form of a file or streaming. The digital storage medium may include various storage mediums such as USB, SD, CD, DVD, Blu-ray, HDD, SSD, and the like. The transmitter 13 may include an element for generating a media file through a predetermined file format and may include an element for transmission through a broadcast/communication network. The receiver 21 may extract/receive the bitstream from the storage medium or network and transmit the bitstream to the decoding unit 22.

The decoding unit 22 may decode the video/image by performing a series of procedures such as dequantization, inverse transform, and prediction corresponding to the operation of the encoding unit 12.

The renderer 23 may render the decoded video/image. The rendered video/image may be displayed through the display.

### Overview of image encoding apparatus

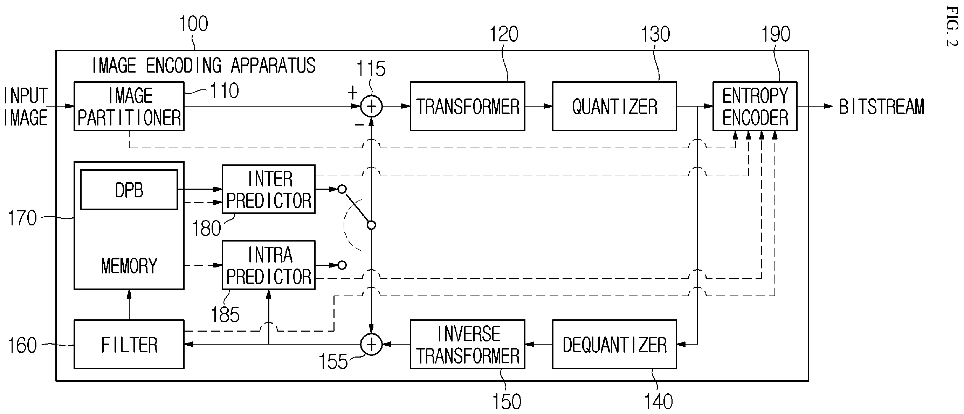

FIG. 2 is a view schematically showing an image encoding apparatus, to which an embodiment of the present disclosure is applicable.

As shown in FIG. 2, the image encoding apparatus 100 may include an image partitioner 110, a subtractor 115, a transformer 120, a quantizer 130, a dequantizer 140, an inverse transformer 150, an adder 155, a filter 160, a memory 170, an inter prediction unit 180, an intra prediction unit 185 and an entropy encoder 190. The inter prediction unit 180 and the intra prediction unit 185 may be collectively referred to as a "prediction unit". The transformer 120, the quantizer 130, the dequantizer 140 and the inverse transformer 150 may be included in a residual processor. The residual processor may further include the subtractor 115.

All or at least some of the plurality of components configuring the image encoding apparatus 100 may be configured by one hardware component (e.g., an encoder or a processor) in some embodiments. In addition, the memory 170 may include a decoded picture buffer (DPB) and may be configured by a digital storage medium.

The image partitioner 110 may partition an input image (or a picture or a frame) input to the image encoding apparatus 100 into one or more processing units. For example, the processing unit may be called a coding unit (CU). The coding unit may be acquired by recursively partitioning a coding tree unit (CTU) or a largest coding unit (LCU) according to a quad-tree binary-tree ternary-tree (QT/BT/TT) structure. For example, one coding unit may be partitioned into a plurality of coding units of a deeper depth based on a quad tree structure, a binary tree structure, and/or a ternary structure. For partitioning of the coding unit, a quad tree structure may be applied first and the binary tree structure and/or ternary structure may be applied later. The coding procedure according to the present disclosure may be performed based on the final coding unit that is no longer partitioned. The largest coding unit may be used as the final coding unit or the coding unit of deeper depth acquired by partitioning the largest coding unit may be used as the final coding unit. Here, the coding procedure may include a procedure of prediction, transform, and reconstruction, which will be described later. As another example, the processing unit of the coding procedure may be a prediction unit (PU) or a transform unit (TU). The prediction unit and the transform unit may be split or partitioned from the final coding unit. The prediction unit may be a unit of sample prediction, and the transform unit may be a unit for deriving a transform coefficient and/or a unit for deriving a residual signal from the transform coefficient.

The prediction unit (the inter prediction unit 180 or the intra prediction unit 185) may perform prediction on a block to be processed (current block) and generate a predicted block including prediction samples for the current block. The prediction unit may determine whether intra prediction or inter prediction is applied on a current block or CU basis. The prediction unit may generate various information related to prediction of the current block and transmit the generated information to the entropy encoder 190. The information on the prediction may be encoded in the entropy encoder 190 and output in the form of a bitstream.

The intra prediction unit 185 may predict the current block by referring to the samples in the current picture. The referred samples may be located in the neighborhood of the current block or may be located apart according to the intra prediction mode and/or the intra prediction technique. The intra prediction modes may include a plurality of non-directional modes and a plurality of directional modes. The non-directional mode may include, for example, a DC mode and a planar mode. The directional mode may include, for example, 33 directional prediction modes or 65 directional prediction modes according to the degree of detail of the prediction direction. However, this is merely an example, more or less directional prediction modes may be used depending on a setting. The intra prediction unit 185 may determine the prediction mode applied to the current block by using a prediction mode applied to a neighboring block.

The inter prediction unit 180 may derive a predicted block for the current block based on a reference block (reference sample array) specified by a motion vector on a reference picture. In this case, in order to reduce the amount of motion information transmitted in the inter prediction mode, the motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. The reference picture including the reference block and the reference picture including the temporal neighboring block may be the same or different. The temporal neighboring block may be called a collocated reference block, a co-located CU (colCU), and the like. The reference picture including the temporal neighboring block may be called a collocated picture (colPic). For example, the inter prediction unit 180 may configure a motion information candidate list based on neighboring blocks and generate information indicating which candidate is used to derive a motion vector and/or a reference picture index of the current block. Inter prediction may be performed based on various prediction modes. For example, in the case of a skip mode and a merge mode, the inter prediction unit 180 may use motion information of the neighboring block as motion information of the current block. In the case of the skip mode, unlike the merge mode, the residual signal may not be transmitted. In the case of the motion vector prediction (MVP) mode, the motion vector of the neighboring block may be used as a motion vector predictor, and the motion vector of the current block may be signaled by encoding a motion vector difference and an indicator for a motion vector predictor. The motion vector difference may mean a difference between the motion vector of the current block and the motion vector predictor.

The prediction unit may generate a prediction signal based on various prediction methods and prediction techniques described below. For example, the prediction unit may not only apply intra prediction or inter prediction but also simultaneously apply both intra prediction and inter prediction, in order to predict the current block. A prediction method of simultaneously applying both intra prediction and inter prediction for prediction of the current block may be called combined inter and intra prediction (CIIP). In addition, the prediction unit may perform intra block copy (IBC) for prediction of the current block. Intra block copy may be used for content image/video coding of a game or the like, for example, screen content coding (SCC). IBC is a method of predicting a current picture using a previously reconstructed reference block in the current picture at a location apart from the current block by a predetermined distance. When IBC is applied, the location of the reference block in the current picture may be encoded as a vector (block vector) corresponding to the predetermined distance. IBC basically performs prediction in the current picture, but may be performed similarly to inter prediction in that a reference block is derived within the current picture. That is, IBC may use at least one of the inter prediction techniques described in the present disclosure.

The prediction signal generated by the prediction unit may be used to generate a reconstructed signal or to generate a residual signal. The subtractor 115 may generate a residual signal (residual block or residual sample array) by subtracting the prediction signal (predicted block or prediction sample array) output from the prediction unit from the input image signal (original block or original sample array). The generated residual signal may be transmitted to the transformer 120.

The transformer 120 may generate transform coefficients by applying a transform technique to the residual signal. For example, the transform technique may include at least one of a discrete cosine transform (DCT), a discrete sine transform (DST), a karhunen-loève transform (KLT), a graph-based transform (GBT), or a conditionally non-linear transform (CNT). Here, the GBT means transform obtained from a graph when relationship information between pixels is represented by the graph. The CNT refers to transform acquired based on a prediction signal generated using all previously reconstructed pixels. In addition, the transform process may be applied to square pixel blocks having the same size or may be applied to blocks having a variable size rather than square.

The quantizer 130 may quantize the transform coefficients and transmit them to the entropy encoder 190. The entropy encoder 190 may encode the quantized signal (information on the quantized transform coefficients) and output a bitstream. The information on the quantized transform coefficients may be referred to as residual information. The quantizer 130 may rearrange quantized transform coefficients in a block type into a one-dimensional vector form based on a coefficient scanning order and generate information on the quantized transform coefficients based on the quantized transform coefficients in the one-dimensional vector form.

The entropy encoder 190 may perform various encoding methods such as, for example, exponential Golomb, context-adaptive variable length coding (CAVLC), context-adaptive binary arithmetic coding (CABAC), and the like. The entropy encoder 190 may encode information necessary for video/image reconstruction other than quantized transform coefficients (e.g., values of syntax elements, etc.) together or separately. Encoded information (e.g., encoded video/image information) may be transmitted or stored in units of network abstraction layers (NALs) in the form of a bitstream. The video/image information may further include information on various parameter sets such as an adaptation parameter set (APS), a picture parameter set (PPS), a sequence parameter set (SPS), or a video parameter set (VPS). In addition, the video/image information may further include general constraint information. The signaled information, transmitted information and/or syntax elements described in the present disclosure may be encoded through the above-described encoding procedure and included in the bitstream.

The bitstream may be transmitted over a network or may be stored in a digital storage medium. The network may include a broadcasting network and/or a communication network, and the digital storage medium may include various storage media such as USB, SD, CD, DVD, Blu-ray, HDD, SSD, and the like. A transmitter (not shown) transmitting a signal output from the entropy encoder 190 and/or a storage unit (not shown) storing the signal may be included as internal/external element of the image encoding apparatus 100. Alternatively, the transmitter may be provided as the component of the entropy encoder 190.

The quantized transform coefficients output from the quantizer 130 may be used to generate a residual signal. For example, the residual signal (residual block or residual samples) may be reconstructed by applying dequantization and inverse transform to the quantized transform coefficients through the dequantizer 140 and the inverse transformer 150.

The adder 155 adds the reconstructed residual signal to the prediction signal output from the inter prediction unit 180 or the intra prediction unit 185 to generate a reconstructed signal (reconstructed picture, reconstructed block, reconstructed sample array). If there is no residual for the block to be processed, such as a case where the skip mode is applied, the predicted block may be used as the reconstructed block. The adder 155 may be called a reconstructor or a reconstructed block generator. The generated reconstructed signal may be used for intra prediction of a next block to be processed in the current picture and may be used for inter prediction of a next picture through filtering as described below.

Meanwhile, luma mapping with chroma scaling (LMCS) is applicable in a picture encoding and/or reconstruction process.

The filter 160 may improve subjective/objective image quality by applying filtering to the reconstructed signal. For example, the filter 160 may generate a modified reconstructed picture by applying various filtering methods to the reconstructed picture and store the modified reconstructed picture in the memory 170, specifically, a DPB of the memory 170. The various filtering methods may include, for example, deblocking filtering, a sample adaptive offset, an adaptive loop filter, a bilateral filter, and the like. The filter 160 may generate various information related to filtering and transmit the generated information to the entropy encoder 190 as described later in the description of each filtering method. The information related to filtering may be encoded by the entropy encoder 190 and output in the form of a bitstream.

The modified reconstructed picture transmitted to the memory 170 may be used as the reference picture in the inter prediction unit 180. When inter prediction is applied through the image encoding apparatus 100, prediction mismatch between the image encoding apparatus 100 and the image decoding apparatus may be avoided and encoding efficiency may be improved.

The DPB of the memory 170 may store the modified reconstructed picture for use as a reference picture in the inter prediction unit 180. The memory 170 may store the motion information of the block from which the motion information in the current picture is derived (or encoded) and/or the motion information of the blocks in the picture that have already been reconstructed. The stored motion information may be transmitted to the inter prediction unit 180 and used as the motion information of the spatial neighboring block or the motion information of the temporal neighboring block. The memory 170 may store reconstructed samples of reconstructed blocks in the current picture and may transfer the reconstructed samples to the intra prediction unit 185.

## Overview of image decoding apparatus

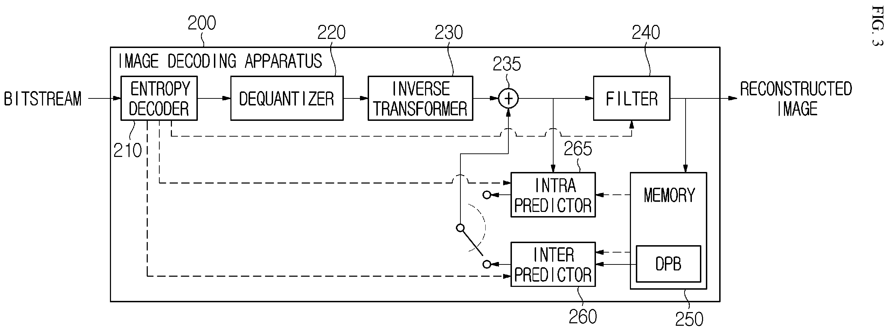

FIG. 3 is a view schematically showing an image decoding apparatus, to which an embodiment of the present disclosure is applicable.

As shown in FIG. 3, the image decoding apparatus 200 may include an entropy decoder 210, a dequantizer 220, an inverse transformer 230, an adder 235, a filter 240, a memory 250, an inter prediction unit 260 and an intra prediction unit 265. The inter prediction unit 260 and the intra prediction unit 265 may be collectively referred to as a "prediction unit". The dequantizer 220 and the inverse transformer 230 may be included in a residual processor.

All or at least some of a plurality of components configuring the image decoding apparatus 200 may be configured by a hardware component (e.g., a decoder or a processor) according to an embodiment. In addition, the memory 170 may include a decoded picture buffer (DPB) or may be configured by a digital storage medium.

The image decoding apparatus 200, which has received a bitstream including video/image information, may reconstruct an image by performing a process corresponding to a process performed by the image encoding apparatus 100 of FIG. 2. For example, the image decoding apparatus 200 may perform decoding using a processing unit applied in the image encoding apparatus. Thus, the processing unit of decoding may be a coding unit, for example. The coding unit may be acquired by partitioning a coding tree unit or a largest coding unit. The reconstructed image signal decoded and output through the image decoding apparatus 200 may be reproduced through a reproducing apparatus (not shown).

The image decoding apparatus 200 may receive a signal output from the image encoding apparatus of FIG. 2 in the form of a bitstream. The received signal may be decoded through the entropy decoder 210. For example, the entropy decoder 210 may parse the bitstream to derive information (e.g., video/image information) necessary for image reconstruction (or picture reconstruction). The video/image information may further include information on various parameter sets such as an adaptation parameter set (APS), a picture parameter set (PPS), a sequence parameter set (SPS), or a video parameter set (VPS). In addition, the video/image information may further include general constraint information. The image decoding apparatus may further decode picture based on the information on the parameter set and/or the general constraint information. Signaled/received information and/or syntax elements described in the present disclosure may be decoded through the decoding procedure and obtained from the bitstream. For example, the entropy decoder 210 decodes the information in the bitstream based on a coding method such as exponential Golomb coding, CAVLC, or CABAC, and output values of syntax elements required for image reconstruction and quantized values of transform coefficients for residual. More specifically, the CABAC entropy decoding method may receive a bin corresponding to each syntax element in the bitstream, determine a context model using a decoding target syntax element information, decoding information of a neighboring block and a decoding target block or information of a symbol/bin decoded in a previous stage, and perform arithmetic decoding on the bin by predicting a probability of occurrence of a bin according to the determined context model, and generate a symbol corresponding to the value of each syntax element. In this case, the CABAC entropy decoding method may update the context model by using the information of the decoded symbol/bin for a context model of a next symbol/bin after determining the context model. The information related to the prediction among the information decoded by the entropy decoder 210 may be provided to the prediction unit (the inter prediction unit 260 and the intra prediction unit 265), and the residual value on which the entropy decoding was performed in the entropy decoder 210, that is, the quantized transform coefficients and related parameter information, may be input to the dequantizer 220. In addition, information on filtering among information decoded by the entropy decoder 210 may be provided to the filter 240. Meanwhile, a receiver (not shown) for receiving a signal output from the image encoding apparatus may be further configured as an internal/external element of the image decoding apparatus 200, or the receiver may be a component of the entropy decoder 210.

Meanwhile, the image decoding apparatus according to the present disclosure may be referred to as a video/image/picture decoding apparatus. The image decoding apparatus may be classified into an information decoder (video/image/picture information decoder) and a sample decoder (video/image/picture sample decoder). The information decoder may include the entropy decoder 210. The sample decoder may include at least one of the dequantizer 220, the inverse transformer 230, the adder 235, the filter 240, the memory 250, the inter prediction unit 160 or the intra prediction unit 265.

The dequantizer 220 may dequantize the quantized transform coefficients and output the transform coefficients. The dequantizer 220 may rearrange the quantized transform coefficients in the form of a two-dimensional block. In this case, the rearrangement may be performed based on the coefficient scanning order performed in the image encoding apparatus. The dequantizer 220 may perform dequantization on the quantized transform coefficients by using a quantization parameter (e.g., quantization step size information) and obtain transform coefficients.

The inverse transformer 230 may inversely transform the transform coefficients to obtain a residual signal (residual block, residual sample array).

The prediction unit may perform prediction on the current block and generate a predicted block including prediction samples for the current block. The prediction unit may determine whether intra prediction or inter prediction is applied to the current block based on the information on the prediction output from the entropy decoder 210 and may determine a specific intra/inter prediction mode (prediction technique).

It is the same as described in the prediction unit of the image encoding apparatus 100 that the prediction unit may generate the prediction signal based on various prediction methods (techniques) which will be described later.

The intra prediction unit 265 may predict the current block by referring to the samples in the current picture. The description of the intra prediction unit 185 is equally applied to the intra prediction unit 265.

The inter prediction unit 260 may derive a predicted block for the current block based on a reference block (reference sample array) specified by a motion vector on a reference picture. In this case, in order to reduce the amount of motion information transmitted in the inter prediction mode, motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. For example, the inter prediction unit 260 may configure a motion information candidate list based on neighboring blocks and derive a motion vector of the current block and/or a reference picture index based on the received candidate selection information. Inter prediction may be performed based on various prediction modes, and the information on the prediction may include information indicating a mode of inter prediction for the current block.

The adder 235 may generate a reconstructed signal (reconstructed picture, reconstructed block, reconstructed sample array) by adding the obtained residual signal to the prediction signal (predicted block, predicted sample array) output from the prediction unit (including the inter prediction unit 260 and/or the intra prediction unit 265). If there is no residual for the block to be processed, such as when the skip mode is applied, the predicted block may be used as the reconstructed block. The description of the adder 155 is equally applicable to the adder 235. The adder 235 may be called a reconstructor or a reconstructed block generator. The generated reconstructed signal may be used for intra prediction of a next block to be processed in the current picture and may be used for inter prediction of a next picture through filtering as described below.

The filter 240 may improve subjective/objective image quality by applying filtering to the reconstructed signal. For example, the filter 240 may generate a modified reconstructed picture by applying various filtering methods to the reconstructed picture and store the modified reconstructed picture in the memory 250, specifically, a DPB of the memory 250. The various filtering methods may include, for example, deblocking filtering, a sample adaptive offset, an adaptive loop filter, a bilateral filter, and the like.

The (modified) reconstructed picture stored in the DPB of the memory 250 may be used as a reference picture in the inter prediction unit 260. The memory 250 may store the motion information of the block from which the motion information in the current picture is derived (or decoded) and/or the motion information of the blocks in the picture that have already been reconstructed. The stored motion information may be transmitted to the inter prediction unit 260 so as to be utilized as the motion information of the spatial neighboring block or the motion information of the temporal neighboring block. The memory 250 may store reconstructed samples of reconstructed blocks in the current picture and transfer the reconstructed samples to the intra prediction unit 265.

In the present disclosure, the embodiments described in the filter 160, the inter prediction unit 180, and the intra prediction unit 185 of the image encoding apparatus 100 may be equally or correspondingly applied to the filter 240, the inter prediction unit 260, and the intra prediction unit 265 of the image decoding apparatus 200.

Meanwhile, the prediction unit of the above-described image encoding/decoding apparatus 100 or 200 may derive a reference sample according to the intra prediction mode of the current block among the neighboring reference samples of the current block, and may generate a prediction sample of the current block based on the reference sample.

For example, a prediction sample may be derived based on an average or interpolation of neighboring reference samples of the current block, and (ii) the prediction sample may be derived based on a reference sample present in a specific (prediction) direction with respect to the prediction sample among the neighboring reference samples of the current block. The case of (i) may be called a non-directional mode or a non-angular mode, and the case of (ii) may be called a directional mode or an angular mode. Also, the prediction sample may be generated through interpolation of the second neighboring sample and the first neighboring sample positioned in the opposite direction of the prediction direction of the intra prediction mode of the current block based on the prediction sample of the current block among the neighboring reference samples. The above-described case may be referred to as linear interpolation intra prediction (LIP). In addition, a temporary prediction sample of the current block may be derived based on the filtered neighboring reference samples, and the prediction sample of the current block may be derived by a weighted sum of at least one reference sample derived according to the intra prediction mode among the existing neighboring reference samples, that is, unfiltered neighboring reference samples, and the temporary prediction sample. The above-described case may be referred to as position dependent intra prediction (PDPC). In addition, a reference sample line with the highest prediction accuracy is selected from among multiple neighboring reference sample lines of the current block to derive the prediction sample using the reference sample located in the prediction direction in the corresponding line, and, at this time, intra prediction encoding may be performed by indicating (signaling) the used reference sample line to the image decoding apparatus 200. The above-described case may be referred to as multi-reference line (MRL) intra prediction or MRL-based intra prediction. In addition, intra prediction is performed based on the same intra prediction mode by partitioning the current block into vertical or horizontal sub-partitions, and neighboring reference samples may be derived and used in units of the sub-partitions.

That is, in this case, the intra prediction mode for the current block is equally applied to the sub-partitions, but the intra prediction performance may be improved in some cases by deriving and using neighboring reference samples in units of sub-partitions. This prediction method may be called intra sub-partitions (ISP) or ISP-based intra prediction. The specific details will be described later. In addition, if the prediction direction based on the prediction sample indicates between the neighboring reference samples, that is, if the prediction direction indicates a fractional sample position, the value of the prediction sample may also be derived through interpolation of a plurality of reference samples located around the corresponding prediction direction (around the corresponding fractional sample position).

The above-described intra prediction methods may be called an intra prediction type to be distinguished from an intra prediction mode. The intra prediction type may be called various terms such as intra prediction technique or additional intra prediction mode. For example, the intra prediction type (or additional intra prediction mode, etc.) may include at least one of the aforementioned LIP, PDPC, MRL or ISP. Information about the intra prediction type may be encoded in an encoding apparatus and included in a bitstream and signaled to a decoding apparatus. Information about the intra prediction type may be implemented in various forms, such as flag information indicating whether each intra prediction type is applied or index information indicating one of several intra prediction types.

## Position dependent intra prediction ( PDPC)

PDPC may indicate an intra prediction method of deriving filtered reference samples by performing filtering based on a filter for the PDPC, deriving a temporary prediction sample of the current block based on the intra prediction mode of the current block and the filtered reference samples, and deriving a prediction sample of the current block by performing a weighted sum of at least one reference sample derived according to the intra prediction mode among existing reference samples, that is, unfiltered reference samples, and the temporary prediction sample. Here, the predefined filter may be one of five 7-tap filters. Alternatively, the predefined filter may be one of a 3-tap filter, a 5-tap filter, and a 7-tap filter. The 3-tap filter, the 5-tap filter, and the 7-tap filter may indicate a filter having 3 filter coefficients, a filter having 5 filter coefficients, and a filter having 7 filter coefficients, respectively.

For example, the prediction result of the intra planar mode may be further modified by the PDPC.

Alternatively, for example, the PDPC is an intra planar mode, an intra DC mode, a horizontal intra prediction mode, a vertical intra prediction mode, a bottom-left intra prediction mode (i.e., #2 intra prediction mode), eight directional intra prediction modes adjacent to the bottom-left intra prediction mode, a top-right intra prediction mode and eight directional intra prediction modes adjacent to the top-right intra prediction mode, without separate signaling.

Specifically, when the PDPC is applied, a prediction sample of (x,y) coordinates predicted based on a linear combination of reference samples and an intra prediction mode may be derived as in Equation 1 below.

[Equation 1]

$$pred(x,y)=(wL{\times}R_{-1,y} + wT{\times}R_{x,-1} - wTL {\times}R_{-1,-1}+(64 - wL - wT+wTL){\times}pred(x,y) + 32\ ){>}{>}6$$

In Equation 1 above, pred(x,y) on the left side represents a prediction sample value at the (x,y) coordinate, and pred(x,y) on the right side represents a temporary (primary) prediction sample value at the (x,y) coordinate. $R_{(x,-1)}$ and $R_{(-1,y)}$ represent a top reference sample and a left reference sample located at the top and left side of the current sample at the (x, y) coordinate, and $R_{(-1,-1)}$ represents a top-left reference sample located at the top-left corner of the current block. In addition, wL represents a weight applied to the left reference sample, wT represents a weight applied to the top reference sample, and wTL represents a weight applied to the top-left reference sample.

Meanwhile, when PDPC is applied to intra planar mode, intra DC mode, horizontal intra prediction mode, and vertical intra prediction mode, additional boundary filters such as a conventional DC mode boundary filter or a vertical/horizontal mode edge filter may not be needed.

The temporary (primary) prediction sample may be generated as a result of performing intra prediction based on reference samples and the intra prediction mode of the current block. If PDPC is applied to the current block, the final prediction sample of the current block may be generated based on, for example, Equation 1 above. If PDPC is not applied to the current block, the temporary (primary) prediction sample may be used as the final prediction sample of the current block.

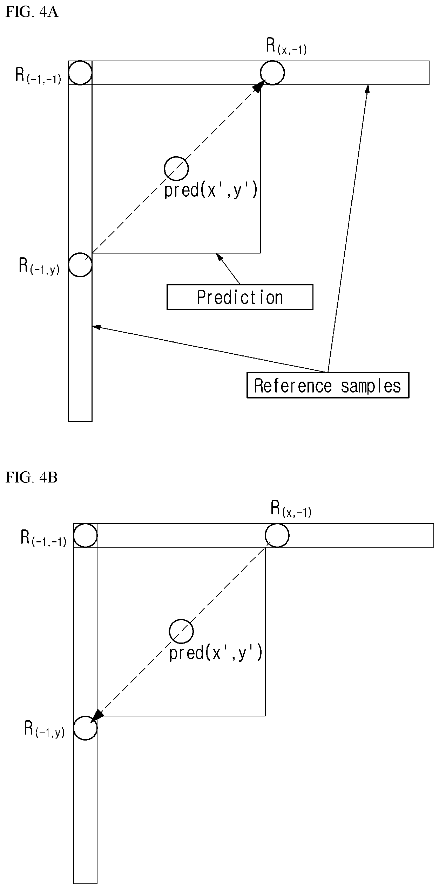

FIGS. 4A to 4D are diagrams showing reference samples defined in PDPC.

In FIGS. 4A to 4D, pred(x, y) represents a prediction sample (temporary prediction sample described above) obtained through intra prediction, and $R_{(x,-1)}$ and $R_{(-1, y)}$ represent a top reference sample and a left reference sample located at the top and left side of the current sample at the (x, y) coordinate.

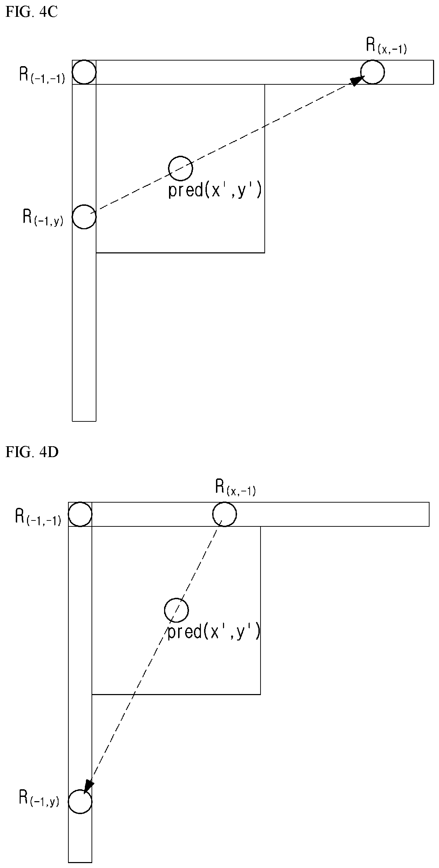

FIG. 4A shows reference samples ($R_{x,-1}$, $R_{-1,y}$, $R_{-1,-1}$) when the prediction mode is a Diagonal top-right mode. FIG. 4B shows reference samples ($R_{x,-1}$, $R_{-1,y}$, $R_{-1,-1}$) when the prediction mode is a Diagonal bottom-left mode. FIG. 4C shows reference samples ($R_{x,-1}$, $R_{-1,y}$, $R_{-1,-1}$) when the prediction mode is an Adjacent diagonal top-right mode. FIG. 4D shows reference samples ($R_{x,-1}$, $R_{-1,y}$, $R_{-1,-1}$) when the prediction mode is an Adjacent diagonal bottom-left mode. The weights of the PDPC may be derived based on the prediction modes. The weights wT, wL and wTL of the PDPC may be derived as shown in Table 1 below.

[Table 1]

| Prediction mode | wT | wL | wTL |
|---|---|---|---|
| Diagonal top-right mode | 16 >> ( ( $y'$<<1 ) >> *shift*) | 16 >> ( ( $x'$<<1 ) >> *shift*) | 0 |
| Diagonal bottom-left mode | 16 >> ( ( $y'$<<1 ) >> *shift* ) | 16 >> ( ( $x'$<<1 ) >> *shift* ) | 0 |
| Adjacent diagonal top-right mode | 32 >> ( ( $y'$<<1 ) >> *shift* ) | 0 | 0 |
| Adjacent diagonal bottom-left mode | 0 | 32 >> ( ( $x'$<<1 ) >> *shift*) | 0 |

In position dependent intra prediction combination (PDPC), a prediction sample is generated using a reference sample according to a prediction mode, and then the prediction sample is improved using a neighboring reference sample. Instead of applying PDPC to all intra prediction modes, the PDPC is restrictively applied to Planar, DC, 2 (bottom-right mode), VDIA (top-left mode), Hor (horizontal mode), Ver (vertical mode), neighbor modes (#3 to #10 modes) of mode #2, and neighbor modes (#58 to #65 mode) of VDIA mode based on 65 directional intra prediction modes. In addition, instead of being applied to all prediction samples within a block to be currently encoded, it may be applied variably considering the size of a block.

**Template-based intra mode derivation (TIMD)**

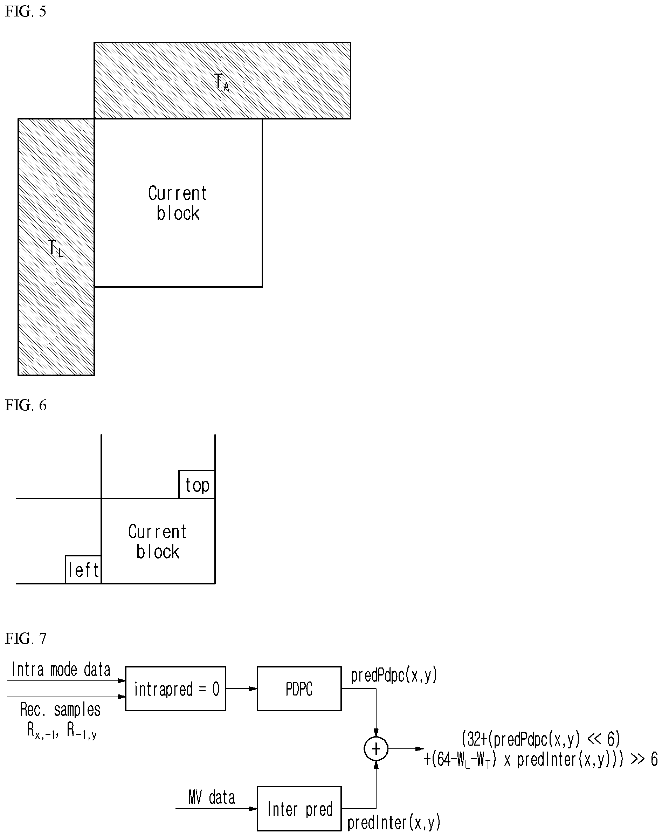

For each intra prediction mode of the most probable modes (MPM), a sum of absolute difference (SATD) between prediction and reconstructed samples of a predetermined template may be computed. The template may include a left template $T_L$ adjacent to the left side of a current block and an upper template $T_A$ adjacent to the upper side of the current block, as in the example of FIG. 5, and the size of the template may vary depending on the width and/or height of the current block. Then, the first two intra prediction modes having the minimum SATD may be selected as TIMD modes. The two TIMD modes may be fused together with weights, and such weighted intra prediction may be used to code a current CU. The derivation process of the TIMD modes may include the PDPC described above.
The costs of the two selected modes may be compared with a predetermined threshold, and if the condition of Equation 2 using a cost factor of 2 is satisfied, the combination may be applied. Conversely, if the condition of Equation 2 is not satisfied, only a first mode (i.e., mode1) may be used.

[Equation 2]

$$costMode2 < 2*costMode1$$

(When the above-described combination is applied,) the weight for each mode may be calculated using the SATD cost of each mode as shown in Equation 3 below.

[Equation 3]

$$weight1 = costMode2/(costMode1 + costMode2)$$

$$weight2 = 1 - weight1$$

**Combined inter and intra prediction (CIIP)**

In order to generate a prediction sample of a current block, the CIIP mode described above may be applied to the current block. In addition, an additional flag (e.g., ciip_flag) may be signaled to indicate whether the CIIP mode is applied to a current CU. For example, if the CU is coded in merge mode, the CU may include at least 64 luma samples (i.e., the width × height of the CU is 64 or more). In addition, if both the width and the height of the CU are less than 128 luma samples, the additional flag may be signaled to indicate whether the CIIP mode is applied to the current CU.
According to the CIIP mode, an inter prediction signal $P_{inter}$ and an intra prediction signal $P_{intra}$ may be combined (to generate prediction samples). The inter prediction signal $P_{inter}$ may be derived according to the same inter prediction process as the regular merge mode, and the intra prediction signal $P_{intra}$ may be derived according to the regular intra prediction process using the planar mode. Thereafter, the inter prediction signal $P_{inter}$ and the intra prediction signal $P_{intra}$ may be combined using weighted averaging as shown in Equation 4 below.

[Equation 4]

$$P_{\text{CIIP}} = \left((4 - wt) * P_{inter} + wt * P_{intra} + 2\right) \gg 2$$

In Equation 4, the weight wt may be calculated depending on the coding mode of the top neighboring block (top) and the left neighboring block (left) illustrated in FIG. 6. For example, the variable isIntraTop may be set to 1 if the top neighboring block (top) is available, and 0 otherwise. In addition, the variable isIntraLeft may be set to 1 if the left neighboring block (left) is available, and 0 otherwise. When the sum of the set variables isIntraTop and isIntraLeft is 2, the weight wt may be set to 3. Conversely, when the sum of the set variables isIntraTop and isIntraLeft is 1, the weight wt may be set to 2. In other cases, the weight wt may be set to 1.

## (1) PDPC blending CIIP

In the ECM (Enhanced compression model), the CIIP mode may be extended based on the PDPC (position dependent intra prediction). The extended CIIP mode (CIIP_PDPC) may be referred to as a PDPC blending CIIP mode. In the PDPC blending CIIP mode (CIIP_PDPC), the prediction of the regular merge mode may be refined using the reconstructed samples at the top (Rx, -1) and left (R-1, y) positions. The refinement may inherit the PDPC scheme. The prediction process according to the PDPC blending CIIP mode (CIIP_PDPC) is as illustrated in FIG. 7. In FIG. 7, variables $W_T$ and $W_L$ may represent weights that vary depending on the sample positions within a block as defined in PDPC.

Meanwhile, information about the PDPC blending CIIP mode (CIIP_PDPC) may be signaled together with information about regular CIIP mode. For example, if the CIIP flag (e.g., ciip_flag) is 1 (i.e., the CIIP mode is applied to the current CU), the CIIP_PDPC flag may be additionally signaled to indicate whether the PDPC blending CIIP mode (CIIP_PDPC) is used.

## (2) Combination of TIMD and TM merge with CIIP

In ECM, the CIIP mode may be extended based on Template-based intra mode derivation (TIMD) and Template matching (TM) merge. For example, prediction samples may be generated by weighting the predicted inter prediction signal using the CIIP-TM merge candidate and the predicted intra prediction signal using the intra prediction mode derived by TIMD. The method may be applied only to coding blocks having an area of 1024 or less.

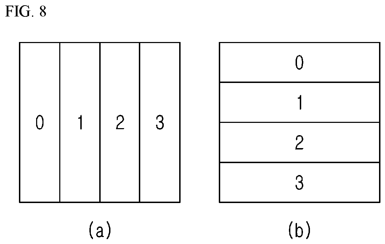

The TIMD derivation method may be used to derive an intra prediction mode in CIIP. Specifically, an intra prediction mode having the smallest sum of absolute difference (SATD) values in a TIMD mode list may be selected, and the selected intra prediction mode may be mapped to any one of 67 intra prediction modes. If the derived intra prediction mode is an angular mode, a set of weights (wIntra, wInter) applied to the intra prediction signal and the inter prediction signal may be modified. For example, for modes close to the horizontal (e.g., 2≤angular mode index<34), the current block may be horizontally partitioned into four subblocks (indexes 0 to 3) as illustrated in (a) of FIG. 8. Also, for modes close to the vertical (e.g., 34≤angular mode index≤66), the current block may be vertically partitioned into four sub-blocks (index 0 to 3) as illustrated in (b) of FIG. 8. In addition, for each sub-block (index 0 to 3), different sets of weights (wIntra, wInter) may be applied as shown in Table 2.

[Table 2]

| The sub-block index | (wIntra, wInter) |
|---|---|
| 0 | (6, 2) |
| 1 | (5, 3) |
| 2 | (3, 5) |
| 3 | (2, 6) |

Referring to Table 2, a weight set of (6, 2) may be applied to a subblock with an index 0, a weight set of (5, 3) may be applied to a subblock with an index 1, a weight set of (3, 5) may be applied to a subblock with an index 2, and a weight set of (2, 6) may be applied to a subblock with an index 3.

Meanwhile, in the CIIP-TM mode, a list of CIIP-TM merge candidates may be built. In addition, the CIIP-TM merge candidates may be refined by template matching. In addition, the CIIP-TM merge candidates may be reordered by a predetermined method (e.g., Adaptive reordering of merge candidate (ARMC)) like regular merge candidates. In one example, the maximum number of CIIP-TM merge candidates may be equal to 2.

Hereinafter, transform/inverse transform related to the present disclosure will be described in detail.

### Overview of transform/inverse transform

As described above, the encoding apparatus may derive a residual block (residual samples) based on a block (prediction blocks) predicted through intra/inter/IBC prediction, and derive quantized transform coefficients by applying transform and quantization to the derived residual samples. Information on the quantized transform coefficients (residual information) may be included and encoded in a residual coding syntax and output in the form of a bitstream. The decoding apparatus may acquire and decode information on the quantized transform coefficients (residual information) from the bitstream to derive quantized transform coefficients. The decoding apparatus may derive residual samples through dequantization/inverse transform based on the quantized transform coefficients. As described above, at least one of quantization/dequantization and/or transform/inverse transform may be skipped. When transform/inverse transform is skipped, the transform coefficient may be referred to as a coefficient or a residual coefficient or may still be referred to a transform coefficient for uniformity of expression. Whether transform/inverse transform is skipped may be signaled based on a transform skip flag (e.g., transform_skip_flag).

In addition, in the present disclosure, a quantized transform coefficient and a transform coefficient may be referred to as a transform coefficient and a scaled transform coefficient, respectively. In this case, residual information may include information about the transform coefficient(s), and the information about the transform coefficient(s) may be signaled via residual coding syntax. Transform coefficients may be derived based on the residual information (or the information about the transform coefficient(s)), and scaled transform coefficients may be derived through inverse transform (scaling) on the transform coefficients. Residual samples may be derived based on inverse transform (transform) on the scaled transform coefficients. This may be similarly applied/expressed in other parts of the present disclosure.

Transform/inverse transform may be performed based on transform kernel(s). For example, a multiple transform selection (MTS) scheme is applicable according to the present disclosure. In this case, some of a plurality of transform kernel sets may be selected and applied to a current block. A transform kernel may be referred to as various terms such as a transform matrix or a transform type. For example, the transform kernel set may indicate a combination of a vertical-direction transform kernel (vertical transform kernel) and a horizontal-direction transform kernel (horizontal transform kernel). For example, MTS index information (e.g., tu_mts_idx syntax element) may be generated/encoded in the image encoding apparatus and signaled to the image decoding apparatus to indicate one of the transform kernel sets. For example, the transform kernel set according to the value of MTS index information may be shown in Table 3.

For example, MTS index information (or mts_idx syntax element) may be generated/encoded in an encoding apparatus and signaled to a decoding apparatus to indicate one of the transform kernel sets. For example, a transform kernel set according to the value of MTS index information may be derived as shown in Table 3.

[Table 3]

| tu_mts_idx[ x0 ][ y0 ] | 0 | 1 | 2 | 3 | 4 |
|---|---|---|---|---|---|
| trTypeBor | 0 | 1 | 2 | 1 | 2 |
| trTypeVer | 0 | 1 | 1 | 2 | 2 |

In Table 4, tu_mts_idx denotes MTS index information, and trTypeHor and trTypeVer denote a horizontal transform kernel and a vertical transform kernel, respectively.

The transform kernel set may be determined based on, for example, cu_sbt_horizontal_flag and cu_sbt_pos_flag.

[Table 4]

| cu_sbt_horizontal_flag | cu_sbt_pos_flag | trTypeHor | trTypeVer |
|---|---|---|---|
| 0 | 0 | 2 | 1 |
| 0 | 1 | 1 | 1 |
| 1 | 0 | 1 | 2 |
| 1 | 1 | 1 | 1 |

The transform kernel set may be determined based on, for example, cu_sbt_horizontal_flag and cu_sbt_pos_flag. When cu_sbt_horizontal_flag has a value of 1, it indicates that the current block is split into two transform blocks in the horizontal direction, and when it has a value of 0, it indicates that the current block is split into two transform blocks in the vertical direction. When cu_sbt_pos_flag has a value of 1, it indicates that tu_cbf_luma, tu_cbf_cb, and tu_cbf_cr for the first transform block of the current block do not exist in the bitstream, and when it has a value of 0, tu_cbf_luma, tu_cbf_cb and tu_cbf_cr for the second transform block of the current block does not exist in the bitstream. Alternatively, a cu_sbt_pos_flag equal to 0 may indicate that syntax elements tu_cbf_luma, tu_cbf_cb and tu_cbf_cr of the second transform unit within the current coding unit are not present in the bitstream.

Meanwhile, in Tables 3 and 4, trTypeHor may represent a horizontal transform kernel, and trTypeVer may represent a vertical transform kernel. The trTypeHor/trTypeVer value of 0 may represent DCT2, the trTypeHor/trTypeVer value of 1 may represent DST7, and the trTypeHor/trTypeVer value of 2 may represent DCT8. However, this is only an example, and other values may be mapped to other DCT/DST by convention.

Table 5 shows basis functions for the DCT2, DCT8, and DST7 described above as examples.

[Table 5]

| Transform Type | Basis function $T_i(j)$, $i,j$ = 0, 1,..., $N$-1 |
|---|---|
| DCT-II | $T_i(j) = \omega_0 \cdot \sqrt{\dfrac{2}{N}} \cdot \cos\left(\dfrac{\pi \cdot i \cdot (2j+1)}{2N}\right)$ <br><br> where, $\quad \omega_0 = \begin{cases} \sqrt{\dfrac{2}{N}} & i = 0 \\ 1 & i \neq 0 \end{cases}$ |
| DCT-VIII | $T_i(j) = \sqrt{\dfrac{4}{2N+1}} \cdot \cos\left(\dfrac{\pi \cdot (2i+1) \cdot (2j+1)}{4N+2}\right)$ |
| DST-VII | $T_i(j) = \sqrt{\dfrac{4}{2N+1}} \cdot \sin\left(\dfrac{\pi \cdot (2i+1) \cdot (j+1)}{2N+1}\right)$ |

In the present disclosure, the MTS-based transform is applied as primary transform, and secondary transform may be further applied. The secondary transform may be applied only to coefficients in a top-left wxh region of a coefficient block to which the primary transform is applied, and may be called reduced secondary transform (RST). For example, w and/or h may be 4 or 8. In the transform, the primary transform and the secondary transform may be sequentially applied to a residual block, and in the inverse transform, the inverse secondary transform and the inverse primary transform may be sequentially applied to the transform coefficients. The secondary transform (RST transform) may be called a low frequency coefficients transform (LFCT) or a low frequency non-separable transform (LFNST). The inverse secondary transform may be called inverse LFCT or inverse LFNST.

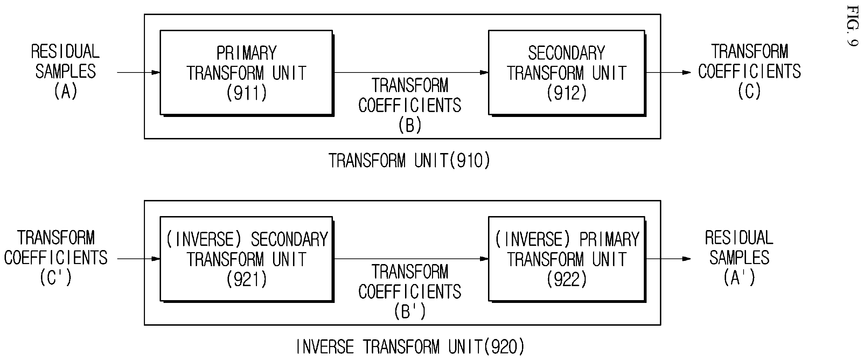

FIG. 9 is a diagram illustrating a transform and inverse transform process. In FIG. 9, a transform unit 910 may correspond to the transform unit 120 of FIG. 2, and an inverse transform unit 920 may correspond to the inverse transform unit 150 of FIG. 2 or the inverse transform unit 230 of FIG. 3.

Referring to FIG. 9, the transform unit 910 may include a primary transform unit 911 and a secondary transform unit 912.

The primary transform unit 911 may apply primary transform to residual samples A to generate (primary) transform coefficients B. In the present disclosure, the primary transform may be referred to as core transform.

The primary transform may be performed based on an MTS scheme. When the conventional MTS is applied, a transform from a spatial domain to a frequency domain may be applied to the residual signal (or residual block) based on DCT type 2, DST type 7, and DCT type 8, etc., to generate transform coefficients (or primary transform coefficients). Here, DCT type 2, DST type 7, and DCT type 8, etc. may be referred to as transform type, transform kernel, or transform core. Examples of basis functions for DCT type 2, DST type 7, and DCT type 8 are as described above with reference to Table 4.

Meanwhile, the transform/inverse transform may be performed in units of CU or TU. That is, the transform/inverse transform may be applied to residual samples in a CU or residual samples in a TU. The CU size and the TU size may be the same, or multiple TUs may exist in a CU area. Meanwhile, the CU size may generally represent a luma component (sample) CB size. The TU size may generally represent a luma component (sample) TB size. The chroma component (sample) CB or TB size may be derived based on the luma component (sample) CB or TB size according to the component ratio according to the color format (chroma format, e.g., 4:4:4, 4:2:2, 4:2:0, etc.). The TU size may be derived based on maxTbSize. For example, when the CU size is larger than the maxTbSize, multiple TU(TB)s of the maxTbSize may be derived from the CU, and transform/inverse transform may be performed in units of the TU(TB). The maxTbSize may be considered in determining whether to apply various intra prediction types such as ISP. Information about the maxTbSize may be determined in advance, or may be generated and encoded in an encoding apparatus and signaled to a decoding apparatus.

As mentioned above, the transform may be applied to the residual blocks. This is to decorrelate the residual blocks as much as possible, concentrate the coefficients in low frequencies, and create a zero tail at the end of the block. In the JEM software, the transform part includes two main functions, namely, core transform and secondary transform. The core transform consists of the DCT (discrete cosine transform) and DST (discrete sine transform) transform families, which are applied to all the rows and columns of the residual block. Thereafter, the secondary transform may be additionally applied to the top left corner of the output of the core transform. Similarly, the inverse transform may be applied in the order of the secondary inverse transform and the core inverse transform. Specifically, the secondary inverse transform may be applied to the top left corner of the coefficient block. The core inverse transform is then applied to the rows and columns of the output of the secondary inverse transform. The core transform/inverse transform may be referred to as primary transform/inverse transform.

### Overview of adaptive multiple core transform (AMT)

In addition to the conventional DCT-2 and 4x4 DST-7, adaptive (or explicit) multiple transform (AMT or EMT) technique may be used for residual coding for inter- and intra-coded blocks. Hereinafter, AMT and EMT will be used interchangeably. In AMT, multiple transforms selected from DCT/DST families may be used in addition to the conventional transforms. The newly introduced transform matrices in JEM are DST-7, DCT-8, DST-1, and DCT-5. The basis functions of DST/DCT used in AMT are as shown in Table 6.

[Table 6]

| Transform Type | Basis function $T_i(j)$, $i$, $j$=0, 1,..., $N$-1 |
|---|---|
| DCT-II | $$T_i(j) = \omega_0 \cdot \sqrt{\frac{2}{N}} \cdot \cos\left(\frac{\pi \cdot i \cdot (2j+1)}{2N}\right)$$ where $$\omega_0 = \begin{cases} \sqrt{\frac{2}{N}} & i = 0 \\ 1 & i \neq 0 \end{cases}$$ |
| DCT-V | $$T_i(j) = \omega_0 \cdot \omega_1 \cdot \sqrt{\frac{2}{2N-1}} \cdot \cos\left(\frac{2\pi \cdot i \cdot j}{2N-1}\right).$$ where $$\omega_0 = \begin{cases} \sqrt{\frac{2}{N}} & i = 0 \\ 1 & i \neq 0 \end{cases}, \omega_1 = \begin{cases} \sqrt{\frac{2}{N}} & j = 0 \\ 1 & j \neq 0 \end{cases}$$ |
| DCT-VIII | $$T_i(j) = \sqrt{\frac{4}{2N+1}} \cdot \cos\left(\frac{\pi \cdot (2i+1) \cdot (2j+1)}{4N+2}\right)$$ |
| DST-I | $$T_i(j) = \sqrt{\frac{2}{N+1}} \cdot \sin\left(\frac{\pi \cdot (i+1) \cdot (j+1)}{N+1}\right)$$ |
| DST-VII | $$T_i(j) = \sqrt{\frac{4}{2N+1}} \cdot \sin\left(\frac{\pi \cdot (2i+1) \cdot (j+1)}{2N+1}\right)$$ |

EMT may be applied to CUs having width and height less than or equal to 64, and whether EMT is applied may be controlled by a CU level flag. For example, if the CU level flag is 0, DCT-2 is applied to the CU to encode the residue. For a luma coding block within a CU to which EMT is applied, two additional flags are signaled to identify the horizontal and vertical transforms to be used. In JEM, the residual of a block may be coded in transform skip mode. For intra residual coding, a mode-dependent transform candidate selection process is used due to different residual statistics of different intra prediction modes. For example, three transform subsets are defined as in Table 7, and the transform subset is selected based on the intra prediction mode as in Table 8.

[Table 7]

| Transform Set | Transform Candidates |
|---|---|
| 0 | DST-VII, DCT-VIII |
| 1 | DST-VII, DST-I |
| 2 | DST-VII, DCT-VIII |

[Table 8]

| Intra Mode | 0 | 1 | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|---|---|
| V | 2 | 1 | 0 | 1 | 0 | 1 | 0 | 1 | 0 | 1 | 0 | 1 | 0 | 1 | 0 | 0 | 0 | 0 |
| H | 2 | 1 | 0 | 1 | 0 | 1 | 0 | 1 | 0 | 1 | 0 | 1 | 0 | 1 | 2 | 2 | 2 | 2 |
| Intra Mode | 18 | 19 | 20 | 21 | 22 | 23 | 24 | 25 | 25 | 27 | 28 | 29 | 30 | 31 | 32 | 33 | 34 | |
| V | 0 | 0 | 0 | 0 | 0 | 1 | 0 | 1 | 0 | 1 | 0 | 1 | 0 | 1 | 0 | 1 | 0 | |
| H | 2 | 2 | 2 | 2 | 2 | 1 | 0 | 1 | 0 | 1 | 0 | 1 | 0 | 1 | 0 | 1 | 0 | |
| Intra Mode | 35 | 36 | 37 | 38 | 39 | 40 | 41 | 42 | 43 | 44 | 45 | 46 | 47 | 48 | 49 | 50 | 51 | 52 |
| V | 1 | 0 | 1 | 0 | 1 | 0 | 1 | 0 | 1 | 0 | 1 | 2 | 2 | 2 | 2 | 2 | 2 | 2 |
| H | 1 | 0 | 1 | 0 | 1 | 0 | 1 | 0 | 1 | 0 | 1 | 0 | 0 | 0 | 0 | 0 | 0 | 0 |
| Intra Mode | 53 | 54 | 55 | 56 | 57 | 58 | 59 | 60 | 61 | 62 | 63 | 64 | 65 | 66 | | | | |
| V | 2 | 2 | 1 | 0 | 1 | 0 | 1 | 0 | 1 | 0 | 1 | 0 | 1 | 0 | | | | |
| H | 0 | 0 | 1 | 0 | 1 | 0 | 1 | 0 | 1 | 0 | 1 | 0 | 1 | 0 | | | | |

With the subset concept, a transform subset is first identified based on Table 7 using the intra prediction mode of a CU with CU-level EMT_CU_flag of 1. Then, for each horizontal (EMT_TU_horizontal_flag) and vertical (EMT_TU_vertical_flag) transform, one of the two transform candidates within the identified transform subset is selected based on explicit signaling using flags according to Table 8.

Table 9 shows the transform configuration groups to which AMT is applied.

[Table 9]

| Configuration group | | Horizontal (row) transform | Vertical (column) transform | 35 intra Prediction modes | 67 intra Prediction modes |
|---|---|---|---|---|---|
| Group 0 (G0) | 0 | DST7 | DST7 | 0 | 0 |
| | 1 | DCT5 | DST7 | | |
| | 2 | DST7 | DCT5 | | |
| | 3 | DCT5 | DCT5 | | |
| Group 1 (G1) | 0 | DST7 | DST7 | 1, 3, 5, 7, 13, 15, 17, 19, 21, 23, 29, 31, 33 | 1, 3, 5, 7, 9, 11, 13, 23, 25, 27, 29, 31, 33, 35, 37, 39, 41, 43, 45, 55, 57, 59, 61, 63, 65 |
| | 1 | DST1 | DST7 | | |
| | 2 | DST7 | DST1 | | |
| | 3 | DST1 | DST1 | | |
| Group 2 (G2) | 0 | DST7 | DST7 | 2, 4, 6, 14, 16, 18, 20, 22, 30, 32, 34 | 2, 4, 6, 8, 10, 12, 24, 26, 28, 30, 32, 34, 36, 38, 40, 42, 44, 56, 58, 60, 64, 66 |
| | 1 | DCT8 | DST7 | | |
| | 2 | DST7 | DCT8 | | |
| | 3 | DCT8 | DCT8 | | |
| Group 3 (G3) | 0 | DST7 | DST7 | 8, 9, 10, 11, 12 (Neighboring angles to horizontal directions) | 14, 15, 16, 17, 18, 19, 20, 21, 22 (Neighboring angles to horizontal directions) |
| | 1 | DCT5 | DST7 | | |
| | 2 | DST7 | DCT8 | | |
| | 3 | DCT5 | DCT8 | | |
| Group 4 (G4) | 0 | DST7 | DST7 | 24, 25, 26, 27, 28 (Neighboring angles to vertical directions) | 46, 47, 48, 49, 50, 51, 52, 53, 54 (Neighboring angles to vertical directions) |
| | 1 | DCT8 | DST7 | | |
| | 2 | DST7 | DCT5 | | |
| | 3 | DCT8 | DCT5 | | |
| Group 5 (G5) | 0 | DCT8 | DCT8 | Inter prediction | Inter prediction |
| | 1 | DST7 | DCT8 | | |
| | 2 | DCT8 | DST7 | | |
| | 3 | DST7 | DST7 | | |

Referring to Table 9, the transform configuration groups are determined based on the prediction mode, and the number of groups may be a total of 6 (G0 to G5). In addition, G0 to G4 correspond to cases where intra prediction is applied, and G5 represents transform combinations (or transform sets, transform combination sets) applied to residual blocks generated by inter prediction.

A transform combination may be composed of a horizontal transform (or row transform) applied to the rows of the corresponding 2D block and a vertical transform (or column transform) applied to the columns.

Here, each transform configuration group may have four transform combination candidates. The four transform combination candidates may be selected or determined through the transform combination index from 0 to 3, and the transform combination index may be encoded and transmitted from the encoder to the decoder.

For example, the residual data (or residual signal) obtained through intra prediction may have different statistical characteristics depending on the intra prediction mode. Therefore, other transforms than the regular cosine transform may be applied for each intra prediction, as shown in Table 9. In the present disclosure, the transform type may be expressed as, for example, DCT-Type 2, DCT-II, and DCT-2.

Table 9 shows the cases of using 35 intra prediction modes and the cases of using 67 intra prediction modes. Multiple transform combinations may be applied for each transform configuration group distinguished in each intra prediction mode column. For example, multiple transform combinations may be composed of four combinations (row-direction transform, column-direction transform). As a specific example, in group 0, DST-7 and DCT-5 may be applied in both the row (horizontal) direction and the column (vertical) direction, so a total of four combinations are possible.

Since a total of four transform kernel combinations may be applied for each intra prediction mode, a transform combination index for selecting one of them may be transmitted for each transform unit. In the present disclosure, the transform combination index may be referred to as an AMT index and may be expressed as amt_idx.

In addition, in addition to the transform kernels presented in Table 9, there may be cases where DCT-2 is optimal for both the row direction and the column direction due to the characteristics of the residual signal. Therefore, the transform may be applied adaptively by defining an AMT flag for each coding unit. Here, if the AMT flag is 0, DCT-2 is applied for both the row direction and the column direction, and if the AMT flag is 1, one of the four combinations may be selected or determined through the AMT index.

For example, if the AMT flag is 0 and the number of transform coefficients for one transform unit is less than 3, the transform kernels in Table 9 may not be applied and DST-7 may be applied for both the row and column directions.

For example, if the transform coefficient values are parsed first and the number of transform coefficients is less than 3, the AMT index is not parsed and DST-7 is applied, which can reduce the amount of additional information transmitted.

For example, AMT may be applied only when the width and height of the transform unit are both 32 or less.

For example, Table 9 may be preset through off-line training.

For example, the AMT index may be defined as a single index that may simultaneously indicate a combination of horizontal transform and vertical transform. Alternatively, the AMT index may be defined as separate horizontal transform index and vertical transform index.

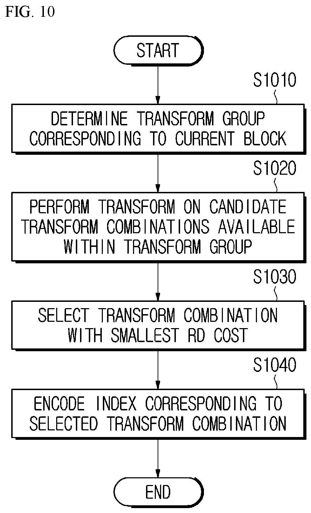

FIG. 10 is a flowchart illustrating an encoding process in which AMT is performed.

AMT may be applied regardless of primary transform or secondary transform. That is, there is no restriction that it should be applied to only one of the two, and it may be applied to both. Here, primary transform may mean transform for initially transforming a residual block, and secondary transform may mean transform for applying transform to a block generated as a result of primary transform.

Referring to FIG. 10, an encoding apparatus may determine a transform group corresponding to a current block (S1010). Here, the transform group may mean the transform group described above with reference to Table 8, but is not limited thereto and may be composed of other transform combinations.

The encoding apparatus may perform transform on candidate transform combinations available within the transform group (S1020).

As a result of performing the transform, the encoding apparatus may determine or select a transform combination with the smallest RD (Rate Distortion) cost (S1030).

The encoding apparatus may encode a transform combination index corresponding to the selected transform combination (S1040).

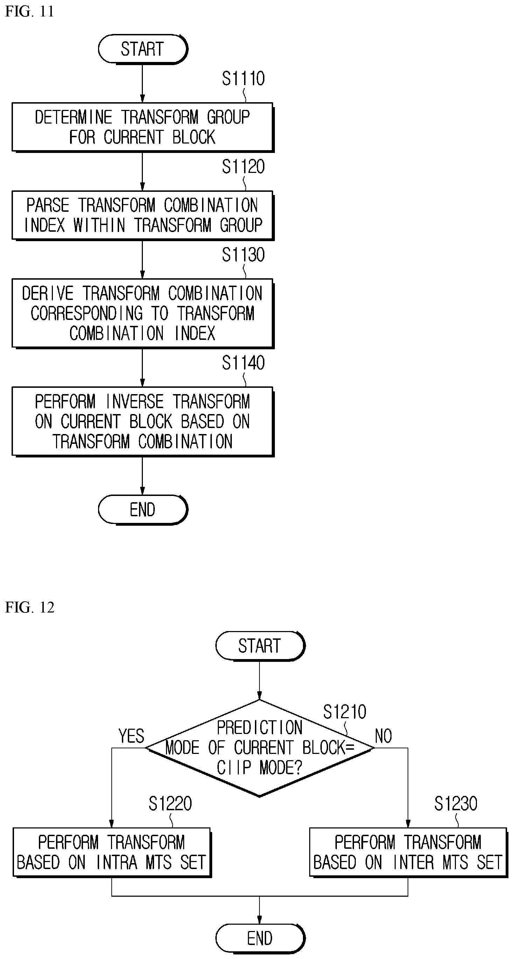

FIG. 11 is a flowchart showing a decoding process in which AMT is performed.

Referring to FIG. 11, a decoding apparatus may determine a transform group for a current block (S1110).

The decoding apparatus may parse a transform combination index (S1120). Here, the transform combination index may correspond to any one of a plurality of transform combinations within the transform group. The step of determining the transform group (S1110) and the step of parsing the transform combination index (S1120) may be performed simultaneously.

The decoding apparatus may derive a transform combination corresponding to the transform combination index (S1130). Here, the transform combination may mean the transform combination described above with reference to Table 8, but is not limited thereto. That is, a configuration by another transform combination is also possible.

The decoding apparatus may perform inverse transform on the current block based on the transform combination (S1140). If the transform combination is composed of row transform and column transform, the row transform may be applied first and then the column transform may be applied. However, this process is not limited thereto, and may be applied in reverse.

## Enhanced MTS for intra coding

In the VVC design, in case of MTS, only DST7 and DCT8 transform kernels are used for intra and inter coding. In contrast, in an enhanced compression mode (ECM), additional primary transforms including DCT5, DST4, DST1 and identity transform (IDT) may be used. In addition, the MTS set may be configured according to the transform unit (TU) size and intra mode information. Sixteen different TU sizes are considered, and for each TU size, five different classes are considered according to the intra mode information. For each class, four different transform pairs may be considered, which is the same as in the VVC case. A total of 80 different classes are considered, but some of these different classes may share exactly the same transform set. Therefore, there may be as many as 58 unique entries (less than 80) in the resultant lookup table (LUT).

Meanwhile, for angular modes, TU shape and joint symmetry for intra prediction are considered. Therefore, mode i with TU shape AxB (where i > 34) may be mapped to the same class as mode j with TU shape BxA (where j = 68 - i). However, the orders of horizontal and vertical transform kernels are swapped for each transform pair. For example, a 16x4 block of mode 18 (horizontal prediction) and a 4x16 block of mode 50 (vertical prediction) are mapped to the same class. In this case, the vertical and horizontal transform kernels are swapped. For wide-angle modes, the closest conventional angular mode is used to determine the transform set. For example, mode 2 is used for all modes between -2 and -14. Similarly, mode 66 is used for all modes between modes 67 and 80.

**Problems of the Related Art**

According to the conventional MTS (multiple transform set) scheme, four MTS combinations are used, as shown in Table 10, using two types of transform kernels, DCT2 and DST7.

[Table 10]

| Horizontal direction | DCT2 | DST7 | DCT2 | DST7 |
|---|---|---|---|---|
| Vertical direction | DCT2 | DCT2 | DST7 | DST7 |

However, since a CIIP (combined inter and intra prediction) predictor is a combination of an intra predictor and an inter predictor, the conventional MTS set as shown in Table 10 may be unsuitable. For example, the DST7/DCT2 combination may be suitable for the intra predictor but unsuitable for the inter predictor. Also, the DCT2/DCT2 combination may be suitable for the inter predictor but unsuitable for the intra predictor. Therefore, if the conventional MTS set is applied without change to the CIIP predictor having both the properties of intra and inter prediction and the residual signal based on it, the compression efficiency may be significantly reduced.

Meanwhile, in an ECM (Enhanced compression model), the PDPC (position dependent intra prediction) blending CIIP mode, which was previously mentioned, is newly introduced as an extended CIIP mode. In addition, unlike the conventional VVC that generates the intra predictor using only the planar mode, the intra mode may be derived and used through TIMD (template-based intra mode derivation), so that all intra prediction modes may be applied to the extended CIIP. This means that the intra predictor and inter predictor may be combined in a more complex and diverse way in the extended CIIP mode, and as a result, the compression efficiency degradation due to the application of the conventional MTS set is bound to be greater.

In order to solve these problems, the present disclosure proposes various methods for more efficiently applying the MTS scheme in the CIIP mode. The embodiments of the present disclosure described below are intended to explain representative aspects of the present disclosure, and may be applied independently or in combination of two or more.

**Embodiment 1**

According to Embodiment 1 of the present disclosure, when a prediction mode of a current block is a CIIP mode, a predetermined intra MTS set may be applied to the current block instead of the MTS set of Table 10 described above. Then, an MTS combination for the current block in the intra MTS set may be selected based on an intra prediction mode applied to the CIIP mode. Hereinafter, Embodiment 1 of the present disclosure will be described in more detail with reference to FIG. 12.

FIG. 12 is a flowchart illustrating an MTS application method according to an embodiment of the present disclosure.

Each step of FIG. 12 may be performed by an image encoding apparatus or an image decoding apparatus. Hereinafter, for convenience of explanation, the description will be based on an image encoding apparatus.

Referring to FIG. 12, the image encoding apparatus may determine whether a prediction mode of a current block is a CIIP mode (S1210). Here, the CIIP mode may be a regular CIIP mode based on the planar mode. Alternatively, the CIIP mode may be an extended CIIP mode of ECM, such as the aforementioned PDPC blending CIIP mode or a TIMD-based CIIP mode.

If the prediction mode of the current block is the CIIP mode ('YES' of S1210), the image encoding apparatus may perform transform on the current block based on a predetermined intra MTS set (S1220). In one embodiment, the predetermined intra MTS set may further include at least one transform kernel of DCT5, DST4, DST1, or IDT (identity transform) in addition to DCT2 and DST7 of Table 10. For example, the intra MTS set may be composed of nine MTS combinations using three types of transform kernels of DCT2, DST7, and DCT5. Alternatively, the intra MTS set may be composed of 16 MTS combinations using four types of transform kernels of DCT2, DST7, DCT5, and DST1. Meanwhile, the types and number of the additional transform kernels described above are exemplary, and thus, the embodiments of the present disclosure are not limited thereto.

The MTS combination for the current block may be selected from the intra MTS set based on the intra prediction mode applied to the CIIP mode. For example, if the CIIP mode is a regular CIIP mode, the MTS combination for the current block may be selected based on the planar mode.

In addition, if the CIIP mode is a PDPC blending CIIP mode, the intra prediction mode applied to the CIIP mode is considered as the planar mode, and the MTS combination for the current block may be selected based on the planar mode. Depending on the embodiment, the intra prediction mode applied to the CIIP mode may be considered as another intra prediction mode other than the planar mode. For example, if the CIIP mode is a PDPC blending mode, the intra prediction mode applied to the CIIP mode is considered as the DC mode, and the MTS combination for the current block may be selected based on the DC mode.

In addition, if the CIIP mode is a TIMD-based CIIP mode, the MTS combination for the current block may be selected based on the intra prediction mode derived by TIMD. Here, as described above, the intra prediction mode derived by TIMD may be any conventional intra mode, such as DC mode, mode 2, etc., in addition to the planar mode.

In contrast, if the prediction mode of the current block is not the CIIP mode ('NO' of S1210), the image encoding apparatus may perform transform on the current block based on a conventional MTS set, for example, the inter MTS set described above with reference to Table 10 (S1230).

According to Embodiment 1 of the present disclosure, when the prediction mode of the current block is the CIIP mode, a predetermined intra MTS set further including an additional transform kernel, rather than the conventional inter MTS set using only DCT2 and DST7, may be applied to the current block. Since the CIIP mode has residual signal characteristics occurring in the intra prediction mode due to a combination of intra predictors, compression efficiency can be improved by applying the intra MTS set. In addition, since the MTS index binarization methods of the intra MTS set and the conventional inter MTS set are the same, there is an advantage in that the conventional binarization process may be applied identically.

## Embodiment 2

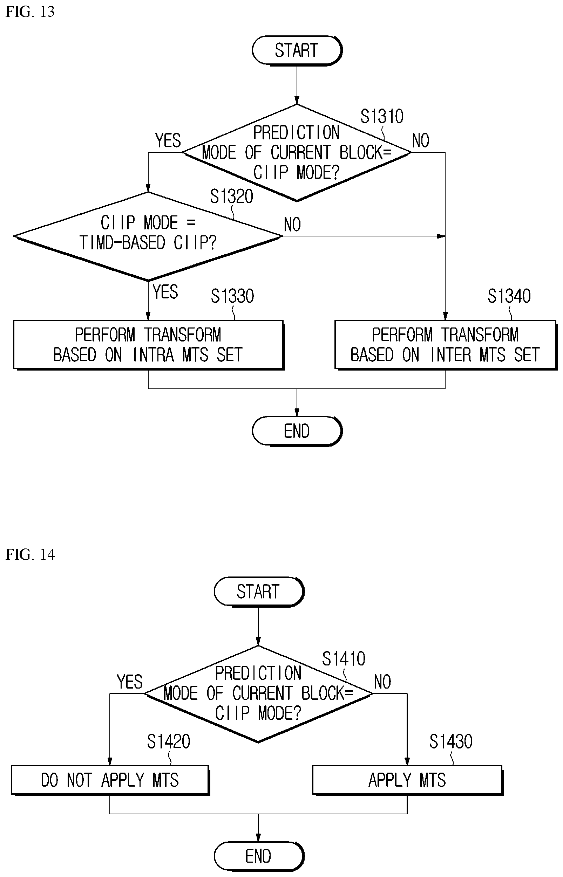

Since the TIMD-based CIIP mode has a greater residual signal characteristic generated in the intra prediction mode than other types of CIIP modes, it may be appropriate to apply the aforementioned intra MTS set rather than the conventional inter MTS set. However, since the PDPC blending CIIP mode generates a predictor having different characteristics from the conventional intra prediction mode, it may not be appropriate to apply the intra MTS set. Accordingly, according to Embodiment 2 of the present disclosure, the aforementioned intra MTS set may be applied only when the prediction mode of the current block is the TIMD-based CIIP mode. Hereinafter, Embodiment 2 of the present disclosure will be described in more detail with reference to FIG. 13.

FIG. 13 is a flowchart illustrating an MTS application method according to an embodiment of the present disclosure.

Each step of FIG. 13 may be performed by an image encoding apparatus or an image decoding apparatus. Hereinafter, for convenience of explanation, the description will be based on an image encoding apparatus.

Referring to FIG. 13, the image encoding apparatus may determine whether a prediction mode of a current block is a CIIP mode (S1310).

If the prediction mode of the current block is the CIIP mode ('YES' of S1310), the image encoding apparatus may determine whether the CIIP mode is a TIMD-based CIIP mode described above (S1320).

As a result of the determination, if the CIIP mode is the TIMD-based CIIP mode ('YES' of S1320), the image encoding apparatus may perform transform on the current block based on a predetermined intra MTS set (S1330). Here, the predetermined intra MTS set may further include at least one transform kernel among DCT5, DST4, DST1, or IDT (identity transform) in addition to DCT2 and DST7 of Table 10, as described above in Embodiment 1.

In contrast, if the CIIP mode is not the TIMD-based CIIP mode (e.g., a PDPC blending CIIP mode) ('NO' of S1320), the image encoding apparatus may perform transform on the current block based on a conventional MTS set, for example, the inter MTS set described above with reference to Table 10 (S1340).

Meanwhile, even if the prediction mode of the current block is not the CIIP mode ('NO' of S1310), the image encoding apparatus may perform transform for the current block based on the conventional MTS set (S1340).

According to Embodiment 2 of the present disclosure, the predetermined intra MTS set including an additional transform kernel other than DCT2 and DST7 may be applied only when the prediction mode of the current block is the TIMD-based CIIP mode. Accordingly, there is an advantage in that the compression efficiency is improved in the CIIP mode and the same MTS index binarization method as before may be used as in Embodiment 1.

## Embodiment 3

In the CIIP mode, since a residual signal is generated by a combination of an intra predictor and an inter predictor, it may have different characteristics from a residual signal generated only by the conventional intra predictor or inter predictor. Therefore, when the MTS scheme is applied to the CIIP mode, the compression efficiency may be reduced. Accordingly, according to Embodiment 3 of the present disclosure, the MTS scheme may be applied only when a prediction mode of a current block is not a CIIP mode. Hereinafter, Embodiment 3 of the present disclosure will be described in more detail with reference to FIG. 14.

FIG. 14 is a flowchart illustrating an MTS application method according to an embodiment of the present disclosure.

Each step of FIG. 14 may be performed by an image encoding apparatus or image decoding apparatus.

Hereinafter, for convenience of explanation, the description will be based on an image encoding apparatus.

Referring to FIG. 14, the image encoding apparatus may determine whether a prediction mode of a current block is a CIIP mode (S1410).

If the prediction mode of the current block is the CIIP mode ('YES' of S1410), the image encoding apparatus may not apply the MTS scheme to the current block (i.e., MTS skip) (S1420). In this case, a predetermined transform kernel (e.g., DCT2) determined according to a regular transform scheme other than the MTS scheme may be used for transform of the current block.

In contrast, if the prediction mode of the current block is not the CIIP mode ('NO' of S 1410), the image encoding apparatus may apply the MTS scheme to the current block (S1430). In this case, a specific MTS combination selected from a predetermined MTS set (e.g., inter MTS set or intra MTS set) may be used for transform of the current block.

According to Embodiment 3 of the present disclosure, the MTS scheme may be applied only when the prediction mode of the current block is not the CIIP mode. Accordingly, the compression efficiency can be improved in the CIIP mode, and the number of MTS binarization bits (or the number of signaling bits) can be reduced.

## Embodiment 4

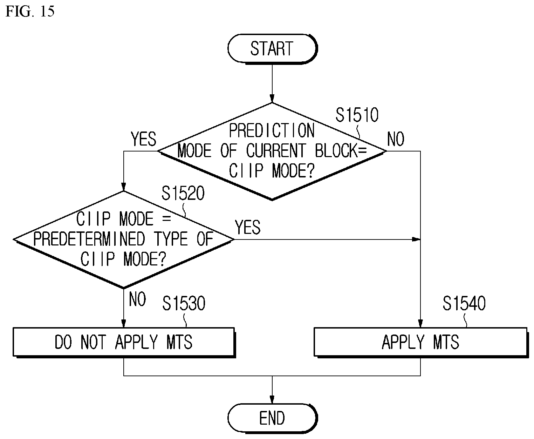

As with Embodiment 3 described above, if the MTS scheme is unconditionally applied to the CIIP mode, the compression efficiency can be reduced. Accordingly, according to Embodiment 4 of the present disclosure, the MTS scheme may be applied only when the prediction mode of the current block is not the CIIP mode or is a specific CIIP mode. Hereinafter, Embodiment 4 of the present disclosure will be described in more detail with reference to FIGS. 15 to 17.

FIG. 15 is a flowchart illustrating an MTS application method according to an embodiment of the present disclosure.

Each step of FIG. 15 may be performed by an image encoding apparatus or image decoding apparatus. Hereinafter, for convenience of explanation, the description will be based on an image encoding apparatus.

Referring to FIG. 15, the image encoding apparatus may determine whether a prediction mode of a current block is a CIIP mode (S1510).

If the prediction mode of the current block is the CIIP mode ('YES' of S1510), the image encoding apparatus may determine whether the CIIP mode is an extended CIIP mode (S1520). In one embodiment, the extended CIIP mode may include at least one of a PDPC blending CIIP mode or a TIMD-based CIIP mode.

As a result of the determination, if the CIIP mode is the extended CIIP mode ('YES' of S1520), the image encoding apparatus may not apply the MTS scheme to the current block (S 1530). In this case, a predetermined transform kernel (e.g., DCT2) determined according to a regular transform scheme other than the MTS scheme may be used for transform of the current block.

In contrast, if the CIIP mode is not the extended CIIP mode ('NO' of S1520), the image encoding apparatus may apply the MTS scheme to the current block (S1540). In this case, a specific MTS combination selected from a predetermined MTS set (e.g., an inter MTS set or an intra MTS set) may be used for transform of the current block.

Meanwhile, even if the prediction mode of the current block is not the CIIP mode ('NO' of S1510), the image encoding apparatus may apply the MTS scheme to the current block (S1540).

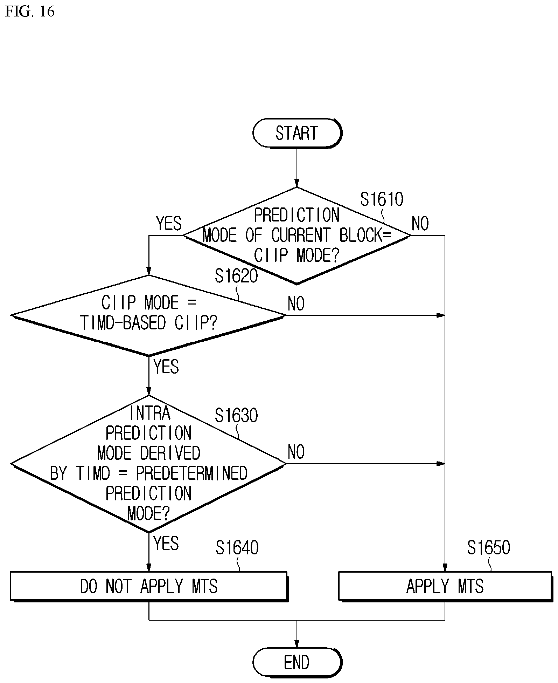

FIG. 16 is a flowchart illustrating an MTS application method according to another embodiment of the present disclosure.

Each step of FIG. 16 may be performed by an image encoding apparatus or image decoding apparatus. Hereinafter, for convenience of explanation, the description will be based on an image encoding apparatus.

Referring to FIG. 16, the image encoding apparatus may determine whether a prediction mode of a current block is a CIIP mode (S1610).

If the prediction mode of the current block is the CIIP mode ('YES' of S1610), the image encoding apparatus may determine whether the CIIP mode is a TIMD-based CIIP mode (S1620).

If the CIIP mode is the TIMD-based CIIP mode ('YES' of S1620), the image encoding apparatus may determine whether the intra prediction mode derived by TIMD is a predetermined mode (S1630). In one embodiment, the predetermined mode may be a non-directional mode, such as a planar mode or a DC mode. As a result of the determination, if the intra prediction mode derived by TIMD is a predetermined mode ('YES' of S 1630), the image encoding apparatus may not apply the MTS scheme to the current block (S1640). On the contrary, if the intra prediction mode derived by TIMD is not the predetermined mode ('NO' of S1630), the image encoding apparatus may apply the MTS scheme to the current block (S1650).

Meanwhile, even if the prediction mode of the current block is not the CIIP mode ('NO' of S1610) or the prediction mode of the current block is the CIIP mode but not the TIMD-based CIIP mode (e.g., the PDPC blending CIIP mode) ('NO' of S1620), the image encoding apparatus may apply the MTS scheme to the current block (S1650).

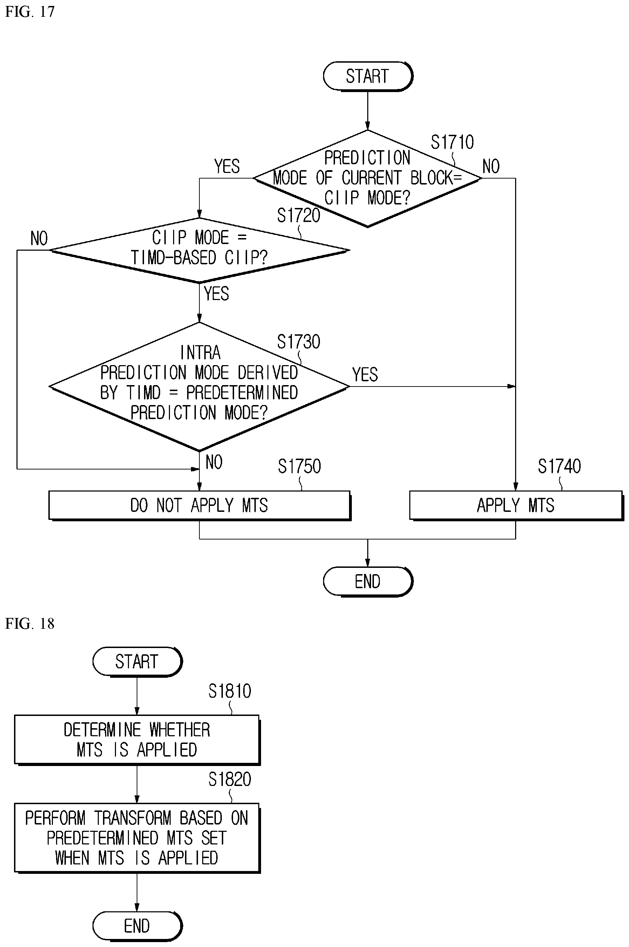

FIG. 17 is a flowchart illustrating an MTS application method according to another embodiment of the present disclosure.

Each step of FIG. 17 may be performed by an image encoding apparatus or image decoding apparatus. Hereinafter, for convenience of explanation, the description will be based on an image encoding apparatus.

Referring to FIG. 17, the image encoding apparatus may determine whether a prediction mode of a current block is a CIIP mode (S1710).

If the prediction mode of the current block is the CIIP mode ('YES' of S1710), the image encoding apparatus may determine whether the CIIP mode is a TIMD-based CIIP mode (S1720).

If the CIIP mode is the TIMD-based CIIP mode ('YES' of S1720), the image encoding apparatus may determine whether the intra prediction mode derived by TIMD is a predetermined mode (S1730). In one embodiment, the predetermined mode may be a non-directional mode, for example, a planar mode or a DC mode. As a result of the determination, if the intra prediction mode derived by TIMD is the predetermined mode ('YES' of S1730), the image encoding apparatus may apply the MTS scheme to the current block (S1740). On the contrary, if the intra prediction mode derived by TIMD is not the predetermined mode ('NO' of S1730), the image encoding apparatus may not apply the MTS scheme to the current block (S1750).

Meanwhile, if the prediction mode of the current block is not the CIIP mode ('NO' of S1710), the image encoding apparatus may apply the MTS scheme to the current block (S1740).

In contrast, if the prediction mode of the current block is the CIIP mode but not the TIMD-based CIIP mode (e.g., the PDPC blending CIIP mode) ('NO' of S1720), the image encoding apparatus may not apply the MTS scheme to the current block (S1750).

According to Embodiment 4 of the present disclosure, the MTS scheme may be applied only when the prediction mode of the current block is not the CIIP mode or is a specific CIIP mode. Accordingly, the compression efficiency in the CIIP mode can be improved, and the number of MTS binarization bits (or the number of signaling bits) can be reduced.

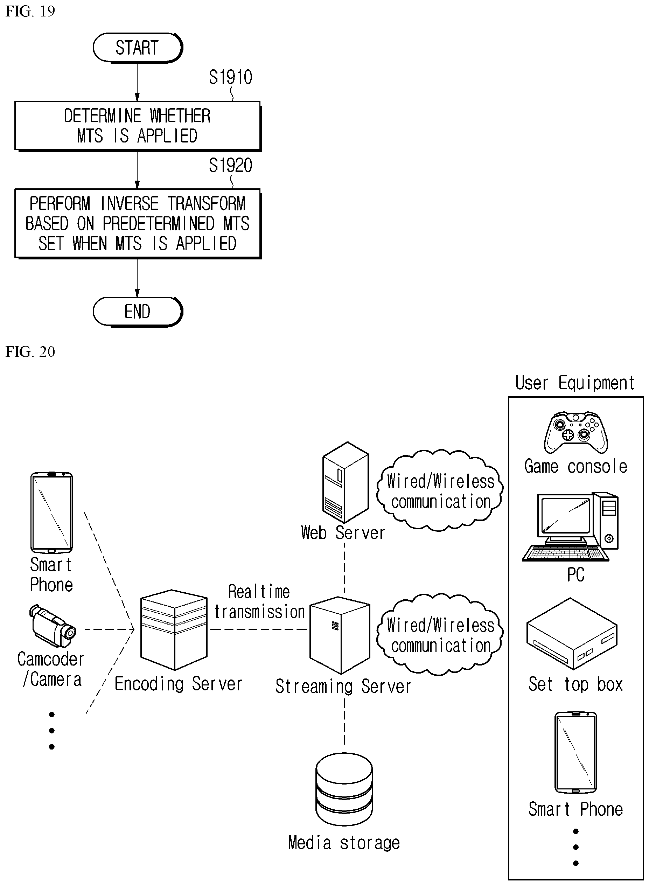

Hereinafter, with reference to FIGS. 18 and 19, an image encoding/decoding method according to an embodiment of the present disclosure will be described in detail.

FIG. 18 is a flowchart illustrating an image encoding method according to an embodiment of the present disclosure.

The image encoding method of FIG. 18 may be performed by the image encoding apparatus of FIG. 2. For example, steps S1810 and S1820 may be performed by the transform unit 120.

Referring to FIG. 18, the image encoding apparatus may determine whether MTS (multiple transform selection) is applied to a current block (S1810).

If the MTS is applied to the current block ('YES' of S1810), the image encoding apparatus may perform transform on the current block based on a predetermined MTS set (S1820).

The MTS set may be determined based on whether the prediction mode of the current block is a CIIP (combined inter and intra prediction) mode. In one embodiment, based on the prediction mode of the current block being the CIIP mode, the MTS set may be determined to be an intra MTS set including DCT2, DST7, and at least one additional transform kernel (e.g., DCT5, DST4, DST1, and/or IDT, etc.). Furthermore, based on the prediction mode of the current block being a TIMD (template-based intra mode derivation)-based CIIP mode, the MTS set may be determined to be an intra MTS set including DCT2, DST7, and at least one additional transform kernel.

In one embodiment, based on the prediction mode of the current block being the CIIP mode, the MTS may not be applied to the current block (i.e., MTS skip).

In one embodiment, based on the prediction mode of the current block being the extended CIIP mode, the MTS may not be applied to the current block. Here, the extended CIIP mode may include at least one of a PDPC (position dependent intra prediction) blending CIIP mode or a TIMD-based CIIP mode.

In one embodiment, the MTS may not be applied to the current block based on the prediction mode of the current block being a template-based intra mode derivation (TIMD)-based CIIP mode and the intra prediction mode derived by TIMD being a predetermined prediction mode. Here, the predetermined prediction mode may be a planar mode or a DC mode.

In one embodiment, the MTS may not be applied to the current block based on the prediction mode of the current block being a template-based intra mode derivation (TIMD)-based CIIP mode and the intra prediction mode derived by TIMD being a predetermined prediction mode. Here, the predetermined prediction mode may be a planar mode or a DC mode.

FIG. 19 is a flowchart illustrating an image decoding method according to an embodiment of the present disclosure.

The image decoding method of FIG. 19 may be performed by the image decoding apparatus of FIG. 3. For example, steps S1910 and S1920 may be performed by the inverse transform unit 230 of FIG. 3.

Referring to FIG. 19, the image decoding apparatus may determine whether MTS (multiple transform selection) is applied to a current block (S1910).

If the MTS is applied to the current block ('YES' of S1910), the image encoding apparatus may perform inverse transform on the current block based on a predetermined MTS set (S1920).

The MTS set may be determined based on whether the prediction mode of the current block is a CIIP (combined inter and intra prediction) mode. In one embodiment, based on the prediction mode of the current block being the CIIP mode, the MTS set may be determined to be an intra MTS set including DCT2, DST7, and at least one additional transform kernel (e.g., DCT5, DST4, DST1, and/or IDT, etc.). In addition, based on the prediction mode of the current block being a TIMD (template-based intra mode derivation)-based CIIP mode, the MTS set may be determined to be an intra MTS set including DCT2, DST7, and at least one additional transform kernel.

In one embodiment, based on the prediction mode of the current block being the CIIP mode, the MTS may not be applied to the current block (i.e., MTS skip).

In one embodiment, based on the prediction mode of the current block being the extended CIIP mode, the MTS may not be applied to the current block. Here, the extended CIIP mode may include at least one of a PDPC (position dependent intra prediction) blending CIIP mode or a TIMD-based CIIP mode.

In one embodiment, the MTS may not be applied to the current block based on the prediction mode of the current block being a template-based intra mode derivation (TIMD)-based CIIP mode and the intra prediction mode derived by TIMD being a predetermined prediction mode. Here, the predetermined prediction mode may be a planar mode or a DC mode.

In one embodiment, the MTS may not be applied to the current block based on the prediction mode of the current block being a template-based intra mode derivation (TIMD)-based CIIP mode and the intra prediction mode derived by TIMD being a predetermined prediction mode. Here, the predetermined prediction mode may be a planar mode or a DC mode.

Various embodiments according to the present disclosure may be used alone or in combination with other embodiments.

While the exemplary methods of the present disclosure described above are represented as a series of operations for clarity of description, it is not intended to limit the order in which the steps are performed, and the steps may be performed simultaneously or in different order as necessary. In order to implement the method according to the present disclosure, the described steps may further include other steps, may include remaining steps except for some of the steps, or may include other additional steps except for some steps.

In the present disclosure, the image encoding apparatus or the image decoding apparatus that performs a predetermined operation (step) may perform an operation (step) of confirming an execution condition or situation of the corresponding operation (step). For example, if it is described that predetermined operation is performed when a predetermined condition is satisfied, the image encoding apparatus or the image decoding apparatus may perform the predetermined operation after determining whether the predetermined condition is satisfied.

The various embodiments of the present disclosure are not a list of all possible combinations and are intended to describe representative aspects of the present disclosure, and the matters described in the various embodiments may be applied independently or in combination of two or more.

Various embodiments of the present disclosure may be implemented in hardware, firmware, software, or a combination thereof. In the case of implementing the present disclosure by hardware, the present disclosure can be implemented with application specific integrated circuits (ASICs), Digital signal processors (DSPs), digital signal processing devices (DSPDs), programmable logic devices (PLDs), field programmable gate arrays (FPGAs), general processors, controllers, microcontrollers, microprocessors, etc.

In addition, the image decoding apparatus and the image encoding apparatus, to which the embodiments of the present disclosure are applied, may be included in a multimedia broadcasting transmission and reception device, a mobile communication terminal, a home cinema video device, a digital cinema video device, a surveillance camera, a video chat device, a real time communication device such as video communication, a mobile streaming device, a storage medium, a camcorder, a video on demand (VoD) service providing device, an OTT video (over the top video) device, an Internet streaming service providing device, a three-dimensional (3D) video device, a video telephony video device, a medical video device, and the like, and may be used to process video signals or data signals. For example, the OTT video devices may include a game console, a blu-ray player, an Internet access TV, a home theater system, a smartphone, a tablet PC, a digital video recorder (DVR), or the like.

FIG. 20 is a view showing a content streaming system, to which an embodiment of the present disclosure is applicable.

As shown in FIG. 20, the content streaming system, to which the embodiment of the present disclosure is applied, may largely include an encoding server, a streaming server, a web server, a media storage, a user device, and a multimedia input device.

The encoding server compresses content input from multimedia input devices such as a smartphone, a camera, a camcorder, etc. into digital data to generate a bitstream and transmits the bitstream to the streaming server. As another example, when the multimedia input devices such as smartphones, cameras, camcorders, etc. directly generate a bitstream, the encoding server may be omitted.

The bitstream may be generated by an image encoding method or an image encoding apparatus, to which the embodiment of the present disclosure is applied, and the streaming server may temporarily store the bitstream in the process of transmitting or receiving the bitstream.

The streaming server transmits the multimedia data to the user device based on a user's request through the web server, and the web server serves as a medium for informing the user of a service. When the user requests a desired service from the web server, the web server may deliver it to a streaming server, and the streaming server may transmit multimedia data to the user. In this case, the content streaming system may include a separate control server. In this case, the control server serves to control a command/response between devices in the content streaming system.

The streaming server may receive content from a media storage and/or an encoding server. For example, when the content is received from the encoding server, the content may be received in real time. In this case, in order to provide a smooth streaming service, the streaming server may store the bitstream for a predetermined time.

Examples of the user device may include a mobile phone, a smartphone, a laptop computer, a digital broadcasting terminal, a personal digital assistant (PDA), a portable multimedia player (PMP), navigation, a slate PC, tablet PCs, ultrabooks, wearable devices (e.g., smartwatches, smart glasses, head mounted displays), digital TVs, desktops computer, digital signage, and the like.

Each server in the content streaming system may be operated as a distributed server, in which case data received from each server may be distributed.

The scope of the disclosure includes software or machine-executable commands (e.g., an operating system, an application, firmware, a program, etc.) for enabling operations according to the methods of various embodiments to be executed on an apparatus or a computer, a non-transitory computer-readable medium having such software or commands stored thereon and executable on the apparatus or the computer.

**Industrial Applicability**

The embodiments of the present disclosure may be used to encode or decode an image.

**Claims**

1. An image decoding method performed by an image decoding apparatus, the image decoding method comprising:

   determining whether multiple transform selection (MTS) is applied to a current block; and
   performing inverse transform on the current block based on a predetermined MTS set, based on the MTS being applied to the current block,
   wherein the MTS set is determined based on whether a prediction mode of the current block is a combined inter and intra prediction (CIIP) mode.

2. The image decoding method of claim 1, wherein the MTS set is determined to be an intra MTS set including DCT2, DST7 and at least one additional transform kernel, based on the prediction mode of the current block being the CIIP mode.

3. The image decoding method of claim 1, wherein the MTS set is determined to be an intra MTS set including DCT2, DST7 and at least one additional transform kernel, based on the prediction mode of the current block being a template-based intra mode derivation (TIMD)-based CIIP mode.

4. The image decoding method of claim 1, wherein the MTS is not applied to the current block, based on the prediction mode of the current block being the CIIP mode.

5. The image decoding method of claim 1,

   wherein the MTS is not applied to the current block, based on the prediction mode of the current block being an extended CIIP mode, and
   wherein the extended CIIP mode comprises at least one of a position dependent intra prediction (PDPC) blending CIIP mode or a TIMD-based CIIP mode.

6. The image decoding method of claim 1, wherein the MTS is not applied to the current block, based on the prediction mode of the current block being a template-based intra mode derivation (TIMD)-based CIIP mode and an intra prediction mode derived by the TIMD being a predetermined prediction mode.

7. The image decoding method of claim 6, wherein the predetermined prediction mode is a planar mode or a DC mode.

8. The image decoding method of claim 1, wherein the MTS is applied to the current block, based on the prediction mode of the current block being a template-based intra mode derivation (TIMD)-based CIIP mode and an intra prediction mode derived by the TIMD being a predetermined prediction mode.

9. An image encoding method performed by an image encoding apparatus, the image encoding method comprising:

determining whether multiple transform selection (MTS) is applied to a current block; and
performing transform on the current block based on a predetermined MTS set, based on the MTS being applied to the current block,
wherein the MTS set is determined based on whether a prediction mode of the current block is a combined inter and intra prediction (CIIP) mode.

10. The image encoding method of claim 9, wherein the MTS set is determined to be an intra MTS set including DCT2, DST7 and at least one additional transform kernel, based on the prediction mode of the current block being the CIIP mode.

11. The image encoding method of claim 9, wherein the MTS set is determined to be an intra MTS set including DCT2, DST7 and at least one additional transform kernel, based on the prediction mode of the current block being a template-based intra mode derivation (TIMD)-based CIIP mode.

12. The image encoding method of claim 9, wherein the MTS is not applied to the current block, based on the prediction mode of the current block being the CIIP mode.

13. The image encoding method of claim 9,

wherein the MTS is not applied to the current block, based on the prediction mode of the current block being an extended CIIP mode, and
wherein the extended CIIP mode comprises at least one of a position dependent intra prediction (PDPC) blending CIIP mode or a TIMD-based CIIP mode.

14. The image encoding method of claim 9, wherein the MTS is not applied to the current block, based on the prediction mode of the current block being a template-based intra mode derivation (TIMD)-based CIIP mode and an intra prediction mode derived by the TIMD being a predetermined prediction mode.

15. A computer-readable recording medium storing a bitstream generated by an image encoding method, the image encoding method comprising:

determining whether multiple transform selection (MTS) is applied to a current block; and
performing transform on the current block based on a predetermined MTS set, based on the MTS being applied to the current block,
wherein the MTS set is determined based on whether a prediction mode of the current block is a combined inter and intra prediction (CIIP) mode.

FIG. 1

**FIG. 2**

IMAGE ENCODING APPARATUS — 100

INPUT IMAGE → IMAGE PARTITIONER (110) → (+) 115 → TRANSFORMER (120) → QUANTIZER (130) → ENTROPY ENCODER (190) → BITSTREAM

DPB / MEMORY (170)

INTER PREDICTOR (180)

INTRA PREDICTOR (185)

FILTER (160)

INVERSE TRANSFORMER (150)

DEQUANTIZER (140)

(+) 155

FIG. 3

FIG. 4A

$R_{(x,-1)}$

$R_{(-1,-1)}$

pred(x',y')

$R_{(-1,y)}$

Prediction

Reference samples

FIG. 4B

$R_{(x,-1)}$

$R_{(-1,-1)}$

pred(x',y')

$R_{(-1,y)}$

FIG. 4C

$R_{(-1,-1)}$

$R_{(x,-1)}$

$R_{(-1,y)}$

pred(x',y')

FIG. 4D

$R_{(x,-1)}$

$R_{(-1,-1)}$

pred(x',y')

$R_{(-1,y)}$

FIG. 5

FIG. 6

FIG. 7

$$(32+(predPdpc(x,y) \ll 6) + (64 - W_L - W_T) \times predInter(x,y))) \gg 6$$

FIG. 8

| 0 | 1 | 2 | 3 |
|---|---|---|---|

(a)

| 0 |
|---|
| 1 |
| 2 |
| 3 |

(b)

FIG. 9

EP 4 503 605 A1

RESIDUAL
SAMPLES
(A)

PRIMARY
TRANSFORM UNIT
(911)

TRANSFORM
COEFFICIENTS
(B)

SECONDARY
TRANSFORM UNIT
(912)

TRANSFORM
COEFFICIENTS
(C)

TRANSFORM UNIT(910)

TRANSFORM
COEFFICIENTS
(C')

(INVERSE) SECONDARY
TRANSFORM UNIT
(921)

TRANSFORM
COEFFICIENTS
(B')

(INVERSE) PRIMARY
TRANSFORM UNIT
(922)

RESIDUAL
SAMPLES
(A')

INVERSE TRANSFORM UNIT(920)

FIG. 10

```
                    ┌─────────────┐
                    │    START    │
                    └──────┬──────┘
                           │              S1010
                           ▼
        ┌──────────────────────────────────────┐
        │      DETERMINE TRANSFORM GROUP        │
        │    CORRESPONDING TO CURRENT BLOCK     │
        └───────────────────┬──────────────────┘
                            │               S1020
                            ▼
        ┌──────────────────────────────────────┐
        │   PERFORM TRANSFORM ON CANDIDATE      │
        │  TRANSFORM COMBINATIONS AVAILABLE     │
        │        WITHIN TRANSFORM GROUP         │
        └───────────────────┬──────────────────┘
                            │               S1030
                            ▼
        ┌──────────────────────────────────────┐
        │      SELECT TRANSFORM COMBINATION     │
        │         WITH SMALLEST RD COST         │
        └───────────────────┬──────────────────┘
                            │               S1040
                            ▼
        ┌──────────────────────────────────────┐
        │    ENCODE INDEX CORRESPONDING TO      │
        │    SELECTED TRANSFORM COMBINATION     │
        └───────────────────┬──────────────────┘
                            │
                            ▼
                    ┌─────────────┐
                    │     END     │
                    └─────────────┘
```

FIG. 11

```
              ( START )
                  |
                  |  S1110
                  v
   ┌─────────────────────────────┐
   │  DETERMINE TRANSFORM GROUP   │
   │      FOR CURRENT BLOCK       │
   └─────────────────────────────┘
                  |
                  |  S1120
                  v
   ┌─────────────────────────────┐
   │  PARSE TRANSFORM COMBINATION │
   │  INDEX WITHIN TRANSFORM GROUP│
   └─────────────────────────────┘
                  |
                  |  S1130
                  v
   ┌─────────────────────────────┐
   │  DERIVE TRANSFORM COMBINATION│
   │  CORRESPONDING TO TRANSFORM  │
   │      COMBINATION INDEX       │
   └─────────────────────────────┘
                  |
                  |  S1140
                  v
   ┌─────────────────────────────┐
   │   PERFORM INVERSE TRANSFORM  │
   │   ON CURRENT BLOCK BASED ON  │
   │      TRANSFORM COMBINATION   │
   └─────────────────────────────┘
                  |
                  v
              (  END  )
```

FIG. 12

```
                        ( START )
                            |
                            v
                         S1210
          YES   /  PREDICTION   \   NO
        ┌──────< MODE OF CURRENT BLOCK= >──────┐
        │       \    CIIP MODE?    /           │
        │          \            /              │
        │ S1220                       S1230    │
        v                                      v
 ┌──────────────────┐          ┌──────────────────┐
 │ PERFORM TRANSFORM │          │ PERFORM TRANSFORM │
 │BASED ON INTRA MTS │          │BASED ON INTER MTS │
 │       SET         │          │       SET         │
 └──────────────────┘          └──────────────────┘
        │                                      │
        └──────────────┬───────────────────────┘
                       v
                   (  END  )
```

FIG. 13

```
                        ┌─────────┐
                        │  START  │
                        └────┬────┘
                             │
                             ▼
                        ╱────────────╲           S1310
              YES      ╱  PREDICTION   ╲    NO
          ┌───────────< MODE OF CURRENT >───────────┐
          │            ╲ BLOCK=CIIP MODE?╱           │
          │             ╲──────┬───────╱             │
          │                                          │
          ▼                                          │
    ╱──────────╲          S1320                       │
   ╱ CIIP MODE = ╲            NO                       │
  <  TIMD-BASED   >──────────────────────┐           │
   ╲   CIIP?     ╱                        │           │
    ╲────┬─────╱                          │           │
         │ YES    S1330                    │   S1340   │
         ▼                                 ▼           ▼
  ┌──────────────────┐           ┌──────────────────┐
  │ PERFORM TRANSFORM│           │ PERFORM TRANSFORM│
  │ BASED ON INTRA   │           │ BASED ON INTER   │
  │ MTS SET          │           │ MTS SET          │
  └────────┬─────────┘           └─────────┬────────┘
           │                               │
           └───────────────┬───────────────┘
                           ▼
                      ┌─────────┐
                      │   END   │
                      └─────────┘
```

FIG. 14

```
                    ┌─────────┐
                    │  START  │
                    └────┬────┘
                         │
                         ▼
                    ╱────────────╲        S1410
          YES      ╱  PREDICTION   ╲   NO
      ┌───────────< MODE OF CURRENT >──────────┐
      │            ╲ BLOCK=CIIP MODE?╱          │
      │             ╲──────┬───────╱            │
      │ S1420                                   │ S1430
      ▼                                         ▼
 ┌──────────────────┐               ┌──────────────────┐
 │ DO NOT APPLY MTS │               │   APPLY MTS      │
 └────────┬─────────┘               └─────────┬────────┘
          │                                   │
          └─────────────────┬─────────────────┘
                            ▼
                       ┌─────────┐
                       │   END   │
                       └─────────┘
```

FIG. 15

```
                          ┌─────────┐
                          │  START  │
                          └────┬────┘
                               │
                               ▼
                          S1510
                   ╱ PREDICTION ╲
         YES    ╱ MODE OF CURRENT BLOCK= ╲   NO
      ◀───────╱      CIIP MODE?           ╲────────┐
      │        ╲                         ╱          │
      │           ╲                   ╱             │
      │              ╲ ╱                            │
      │         S1520                               │
      │      ╱ CIIP MODE = ╲                        │
      │   ╱ PREDETERMINED TYPE OF ╲   YES           │
      └─╱       CIIP MODE?         ╲───────────────▶│
         ╲                        ╱                 │
            ╲                  ╱                    │
               ╲ ╱                                  │
               NO   S1530                     S1540 │
               │                                    │
               ▼                                    ▼
      ┌──────────────────┐              ┌──────────────────┐
      │ DO NOT APPLY MTS │              │    APPLY MTS     │
      └────────┬─────────┘              └────────┬─────────┘
               │                                  │
               └──────────────┬───────────────────┘
                              ▼
                          ┌─────────┐
                          │   END   │
                          └─────────┘
```

FIG. 16

FIG. 17

START

S1710
PREDICTION MODE OF CURRENT BLOCK= CIIP MODE?
YES          NO

S1720
CIIP MODE = TIMD-BASED CIIP?
NO          YES

S1730
INTRA PREDICTION MODE DERIVED BY TIMD = PREDETERMINED PREDICTION MODE?
YES          NO

S1750
DO NOT APPLY MTS

S1740
APPLY MTS

END

FIG. 18

START

S1810
DETERMINE WHETHER MTS IS APPLIED

S1820
PERFORM TRANSFORM BASED ON PREDETERMINED MTS SET WHEN MTS IS APPLIED

END

FIG. 19

FIG. 20

## INTERNATIONAL SEARCH REPORT

International application No.

**PCT/KR2023/004002**

**A. CLASSIFICATION OF SUBJECT MATTER**

**H04N 19/12**(2014.01)i; **H04N 19/107**(2014.01)i; **H04N 19/625**(2014.01)i; **H04N 19/61**(2014.01)i; **H04N 19/157**(2014.01)i; **H04N 19/176**(2014.01)i

According to International Patent Classification (IPC) or to both national classification and IPC

**B. FIELDS SEARCHED**

Minimum documentation searched (classification system followed by classification symbols)

H04N 19/12(2014.01); H04N 19/105(2014.01); H04N 19/11(2014.01); H04N 19/124(2014.01); H04N 19/157(2014.01); H04N 19/176(2014.01); H04N 19/61(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), MTS(multiple transform selection), 셋(set), CIIP(combined inter and intra prediction), 인트라(intra), 예측(predict)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2021-0036397 A (LG ELECTRONICS INC.) 02 April 2021 (2021-04-02) See paragraphs [0058], [0120]-[0121], [0185], [0213], [0647] and [0652]-[0657]; claim 1; and figures 2, 6 and 33. | 1-15 |
| Y | WO 2021-130374 A1 (INTERDIGITAL VC HOLDINGS FRANCE) 01 July 2021 (2021-07-01) See claims 6-7 and 10. | 1-15 |
| Y | DENG, Zhipin et al. EE2-3.1-related: CIIP with template matching. JVET-X0141-v4, Joint Video Experts Team (JVET) of ITU-T SG 16 WP 3 and ISO/IEC JTC 1/SC 29, 24th Meeting, by teleconference. pp. 1-3, 08 October 2021. See pages 1-2. | 3,5-8,11,13-14 |
| A | KR 10-2021-0154157 A (BEIJING BYTEDANCE NETWORK TECHNOLOGY CO., LTD. et al.) 20 December 2021 (2021-12-20) See claims 2-16. | 1-15 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **03 July 2023** | **04 July 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/004002**

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2022-0038060 A (BEIJING BYTEDANCE NETWORK TECHNOLOGY CO., LTD. et al.) 25 March 2022 (2022-03-25)<br>        See claims 1 and 21. | 1-15 |

Form PCT/ISA/210 (second sheet) (July 2022)

**INTERNATIONAL SEARCH REPORT**
Information on patent family members

International application No.

**PCT/KR2023/004002**

| Patent document cited in search report | | | Publication date (day/month/year) | Patent family member(s) | | | Publication date (day/month/year) |
|---|---|---|---|---|---|---|---|
| KR | 10-2021-0036397 | A | 02 April 2021 | CN | 112823524 | A | 18 May 2021 |
| | | | | EP | 3836551 | A1 | 16 June 2021 |
| | | | | KR | 10-2023-0037707 | A | 16 March 2023 |
| | | | | KR | 10-2509578 | B1 | 14 March 2023 |
| | | | | US | 11412242 | B2 | 09 August 2022 |
| | | | | US | 2022-0295085 | A1 | 15 September 2022 |
| | | | | WO | 2020-032632 | A1 | 13 February 2020 |
| WO | 2021-130374 | A1 | 01 July 2021 | CN | 115104304 | A | 23 September 2022 |
| | | | | EP | 4082194 | A1 | 02 November 2022 |
| | | | | US | 2022-0394298 | A1 | 08 December 2022 |
| KR | 10-2021-0154157 | A | 20 December 2021 | CN | 113728641 | A | 30 November 2021 |
| | | | | EP | 3939282 | A1 | 19 January 2022 |
| | | | | JP | 2022-531553 | A | 07 July 2022 |
| | | | | JP | 7277608 | B2 | 19 May 2023 |
| | | | | US | 2022-0295061 | A1 | 15 September 2022 |
| | | | | WO | 2020-216288 | A1 | 29 October 2020 |
| KR | 10-2022-0038060 | A | 25 March 2022 | CN | 114175655 | A | 11 March 2022 |
| | | | | EP | 3984227 | A1 | 20 April 2022 |
| | | | | JP | 2022-540942 | A | 20 September 2022 |
| | | | | US | 11589039 | B2 | 21 February 2023 |
| | | | | US | 2022-0217334 | A1 | 07 July 2022 |
| | | | | WO | 2021-018031 | A1 | 04 February 2021 |

Form PCT/ISA/210 (patent family annex) (July 2022)